# EUROPÄISCHE PATENTANMELDUNG

(11) **EP 3 945 378 A1**
(43) Veröffentlichungstag der Anmeldung: **02.02.2022**
(21) Anmeldenummer: 20187963.2
(22) Anmeldetag: 27.07.2020
(51) Int. Cl.: G05B 19/042, G06N 7/00, G06F 21/60, H04L 9/32, H04L 29/06

(54) **DIGITAL-TWIN BASIERTE PROZESSSTEUERUNG IN EINEM INTERNET-OF-THINGS-NETZWERK**

(71) Anmelder: Siemens Aktiengesellschaft, 80333 München (DE)
(72) Erfinder: Jetzfellner, Thomas, 85609 Aschheim (DE); Sauer, Markus, 81739 München (DE)

(57) **Zusammenfassung**

Ein Knoten eines Netzwerks zur Steuerung eines technischen Systems ist konfiguriert zum Erhalten einer Transaktion umfassend Steuerbefehle, welche durch das technische System ausgeführt werden sollen, Bestimmen einer Validierungsanforderung für die mindestens eine Transaktion, Übertragen der Transaktion und der Validierungsanforderung an eine digitale Simulation des technischen Systems, und Ausführen der Steuerbefehle in der digitalen Simulation, um festzustellen, ob die Transaktion entsprechend der Validierungsanforderung ausgeführt werden kann.

## Beschreibung

Die vorliegende Erfindung betrifft einen Knoten in einem Steuerungsnetzwerk, insbesondere einem DLT-basierten IoT-Netzwerk, weiterhin werden ein entsprechendes Netzwerk, sowie entsprechende Verfahren, Computerprogramme und elektronisch lesbare Datenträger bereitgestellt.

### Technischer Hintergrund

Im digitalen industriellen Umfeld ist die Vernetzung von Edge-Devices und IoT-Geräten ein wichtiger Aspekt. Insbesondere das Bilden von Ökosystemen, bei denen diese entsprechenden Geräte bzw. eine Vielzahl solcher Geräte miteinander kommunizieren, um Prozesse zu steuern, ist eine Herausforderung. Eine besondere Herausforderung ist dabei die Kommunikation in Systemen mit unterschiedlichen Geräteherstellern oder Geräteeigentümern, die sich nicht zwangsläufig vertrauen. Seit einigen Jahren sind Kommunikationsinfrastrukturen (auch IoT-Infrastrukturen genannt) verfügbar, die eine vertrauenswürdige Kommunikation zwischen solchen Geräten selbst in einer als nicht vertrauenswürdig eingestuften Umgebung und ggf. ohne zentrale vertrauensbildenden Drittpartei erlauben. Eine solche Technologie sind z. B. Distributed Ledger Technologien (DLT).

Problematisch dabei ist, dass bei einer Abarbeitung eines Prozesses (z. B. eines Fertigungsprozesses, ein Steuerungsprozess einer komplexen (Stadt)Infrastruktur) durch eine Vielzahl von unterschiedlichen IoT-Geräten in einem heterogenen IoT-Netzwerk unklar ist, ob und wie dieser Prozess ausgeführt werden kann oder ob für dessen Ausführung Optimierungen notwendig sind. Insbesondere in einer semi-automatisieren oder vollautomatisierten IoT Steuerungsinfrastruktur mit verschiedenen Stakeholdern, bei der Teile der Prozesse dynamisch während der Prozessausführung angepasst werden müssen, kann die Prozessausführung unterbrochen oder sogar abgebrochen werden.

Bei konventionellen Lösungen wird durch einen Techniker vor Ort die Prozessausführung überwacht und ggf. manuell eingegriffen.

### Zusammenfassung

Daher besteht Bedarf an verbesserten Techniken für die Steuerung eines technischen Systems, die zumindest einige der genannten Einschränkungen und Nachteile überwinden oder abmildern.

Diese Aufgabe wird mit den Merkmalen der unabhängigen Ansprüche gelöst. In den abhängigen Ansprüchen sind weitere vorteilhafte Ausführungsbeispiele beschrieben.

Im Folgenden wird die erfindungsgemäße Lösung in Bezug auf einen beanspruchten Netzwerkknoten und eine beanspruchte IoT-Infrastruktur, als auch in Bezug auf die beanspruchten Verfahren beschrieben. Merkmale, Vorteile oder alternative Ausführungsbeispiele können den jeweils anderen beanspruchten Kategorien zugeordnet werden, und umgekehrt. In anderen Worten, die Ansprüche für den Netzwerkknoten und die IoT-Infrastruktur können durch Merkmale verbessert werden, die im Rahmen der Verfahren beschrieben und/oder beansprucht werden, und umgekehrt.

Ein Netzwerk ist zur Steuerung eines technischen Systems konfiguriert. Das Netzwerk umfasst mehrere Netzwerkknoten, welche konfiguriert sind, eine Transaktion zu erhalten, an andere Knoten weiterzuleiten, und/oder in dem Netzwerk zu speichern. Die Transaktion umfasst Steuerbefehle, welche durch das technische System ausgeführt werden sollen. In anderen Worten, die Steuerbefehle des technischen Systems und/oder des Netzwerks können nicht ausgeführt sein, und zum Ausführen durch das technische System und/oder das Netzwerk bestimmt sein.

In einigen Beispielen sind die Netzwerkknoten des Steuerungsnetzwerks jeweils mit einer Komponente des technischen Systems verbunden, oder umfassen die Komponente des technischen Systems, wobei ein Knoten Transaktionen empfangen kann, welche durch eine entsprechende Komponente des technischen Systems ausgeführt werden.

In einigen Beispielen werden in einem Netzwerk Transaktionen an mehrere Knoten des Netzwerks gesendet, wobei eine jeweilige Transaktion Steuerbefehle zur Ausführung durch eine Komponente des technischen Systems umfassen kann. Ein derartiges Steuerungsnetzwerk kann beispielsweise als ein Internet-of-Things-System, ein P2P- Netzwerk, eine dezentrale Netzwerkstruktur, d.h. ohne zentrale vertrauenswürdige Instanz, eine dezentrale verteilte Datenbank, eine DLTbasierte Datenbank, eine Blockchain, oder eine beliebige Kombination davon umfassen.

Der Knoten ist konfiguriert, eine Transaktion zu empfangen, umfassend Steuerbefehle, welche durch das technische System ausgeführt werden sollen. Der Knoten ist weiter konfiguriert zum Bestimmen einer Validierungsanforderung für die Transaktion. Der Knoten ist weiter konfiguriert zum Übertragen der Transaktion und der Validierungsanforderung an eine digitale Simulation des technischen Systems. In der digitalen Simulation werden die Steuerbefehle ausgeführt, um festzustellen ob die Transaktion entsprechend der Validierungsanforderung ausgeführt werden kann. In anderen Worten, durch ein simuliertes Ausführen der Transaktion durch die digitale Simulation kann festgestellt werden, ob und/oder wie, beispielsweise unter welchen Bedingungen oder Anforderungen, und/oder durch welche Komponenten/Geräte des technischen Systems, die Transaktion ausgeführt werden kann. In Folge können diese Ergebnisse der digitalen Simulation verwendet werden, um die Transaktion durch das reale technische System zur Ausführung einzuplanen und/oder auszuführen.
Die Transaktion kann durch einen oder mehrere der Knoten des Netzwerks durchgeführt werden. In einem Beispiel kann ein erster Knoten die Transaktion erhalten, und bevor die Transaktion in dem Netzwerk an weitere Knoten verteilt wird, kann die digitale Simulation ausgeführt werden. In einigen Beispielen kann durch die digitale Simulation der Transaktion bestimmt werden, welcher oder welche Knoten des technischen Systems die Transaktion zur Ausführung erhalten sollen.

In anderen Worten kann der Knoten, welche die Transaktion erhält, die Transaktion an die digitale Simulation weiterleiten, in anderen Worten die digitale Simulation Überprüfung aufrufen oder initiieren.

Die digitale Simulation kann separat von dem Steuerungsnetzwerk ausgebildet sein, oder als dezidierter Teil des Netzwerks realisiert sein, insbesondere als dezidierter Knoten oder Rechner des Netzwerks, oder kann auf einem Knoten realisiert sein, welcher mit einer Komponente des technischen Systems verbunden ist und Steuerungsaufgaben in dem technischen System durchführt.

Der Knoten kann weiter konfiguriert sein, wenn durch die digitale Simulation festgestellt wird, dass die Transaktion entsprechend der Validierungsanforderung ausgeführt werden kann, die Transaktion für eine Ausführung durch das technische System zu validieren. Ein Validieren einer Transaktion kann ein Speichern der Transaktion in dem Netzwerk umfassen. In anderen Worten kann das Validieren ein zeitliches Planen Ausführung der Transaktion, oder ein Freigeben der Transaktion umfassen. In einigen Beispielen kann eine Transaktion, welche nicht validiert wurde, nicht gespeichert werden, und/oder nicht durch das technische System ausgeführt werden, d.h. verworfen werden.

In einigen Beispielen wird durch die digitale Simulation an den initiierenden Knoten bestätigt, dass die Transaktion durch das technische System ausgeführt werden kann und optional welcher oder welche Komponenten des technischen Systems die Transaktion ausführen können, und der initiierende der Knoten leitet die Transaktion an das Netzwerk bzw. an die entsprechenden Knoten zur Ausführung weiter.

Ein Verfahren für einen Knoten eines Netzwerks umfasst die folgenden Schritte. In einem Schritt wird eine Transaktion erhalten, welche eines oder mehrere umfassen kann von Anweisungen für das technische System, Aufgaben des technischen Systems, insbesondere Steuerbefehle für das technische System, Programmbefehle, ein Steuerungsprogramm, ein Computerprogramm, einen Smart-Contract, und/oder Chain-Code, die durch das technische System ausgeführt werden sollen. Beispielsweise wird die Transaktion an den Knoten übermittelt oder gesendet, und/oder von dem Knoten empfangen. In einem weiteren Schritt wird eine Validierungsanforderung für die Transaktion bestimmt. In einem weiteren Schritt werden die Transaktion und die Validierungsanforderung an eine digitale Simulation des Netzwerks und/oder des technischen Systems übertragen. In einem weiteren Schritt wird die Transaktion, d.h. die Steuerbefehle, in der digitalen Simulation simuliert ausgeführt, um festzustellen ob die Transaktion entsprechend der Validierungsanforderung ausgeführt werden kann. Wenn die Transaktion durch die digitale Simulation ausgeführt werden kann, in anderen Worten erfolgreich ausgeführt werden kann, dann kann in einem weiteren Schritt der Knoten eine Bestätigung durch die digitale Simulation erhalten, und in einem weiteren Schritt die Transaktion für das reale technische System annehmen bzw. validieren.

In einigen Beispielen umfasst ein Validieren der Transaktion ein Speichern der Transaktion in einer Netzwerkapplikation, einer dezentralen Datenbank, insbesondere einer DLT basierten Datenbank, oder einer Blockchain. Transaktionen, die zur Ausführung gespeichert wurden, können nachfolgend durch das technische System ausgeführt werden, beispielsweise können nur validierte Transaktionen durch das technische System ausgeführt werden. Eine Netzwerkapplikation kann beispielsweise eine Datenbank, eine dezentrale Datenbank, eine Cloud, ein Cloud-Service, ein (distributed) Ledger, eine IoT-Infrastruktur oder eine Blockkette sein oder mittels der gerade genannten Beispiele implementiert werden.

Die IoT-Infrastruktur kann ein Netzwerk sein, wie beispielsweise ein Automatisierungsnetzwerk, ein Steuerungsnetzwerk, ein P2P-Netzwerk, und kann eine Datenbank, wie beispielsweise eine verteilte oder dezentrale Datenbank, insbesondere ein Distributed-Ledger-Technology (DLT) basiertes Netzwerk, oder ein Blockchain-basiertes Netzwerk.

Der Erfindung liegt die Erkenntnis zugrunde dass eine Transaktion, die durch ein technische System ausgeführt werden soll, zuerst in einem Digitalen Zwilling des technischen Systems simuliert wird, wobei zusätzliche Parameter für eine Ausführung durch das reelle System bestimmt werden können, und basierend darauf validiert und/oder in einer DLT basierten Datenbank innerhalb des Netzwerks gespeichert wird.

Das erfindungsgemäße Verfahren ermöglicht somit, eine Netzwerkapplikation (z. B. eine Blockkette oder ein verteiltes Datenbanksystem) für industrielle Anwendung vor allem im Fertigungsbereich einzusetzen. Hierbei können durch die Konfigurierbarkeit und die Auswählbarkeit der Validierung und/oder Übertragung beispielsweise zeitliche Anforderungen vorgegeben werden. Die Netzwerkapplikation validiert nur diejenigen Transaktionen, die von einem entsprechenden netzwerkapplikationsbasierten (z. B. blockkettenbasierten) Fertigungssystem ausgeführt werden können, indem eine vorgegebene Anzahl von Knoten bestätigen, dass diese die Transaktionen ausführen. Dies stellt sicher, dass nur ausführbare oder potentiell ausführbare Transaktionen Teil der Netzwerkapplikation (z. B. Blockkette) werden. Dies ist insbesondere wichtig, wenn man ein solches System als offenes Ökosystem realisiert, bei dem die Validierung von möglichen Transaktionen nicht durch eine Drittpartei realisiert wird.

Ein Netzwerk zur Steuerung eines technischen Systems umfasst einen oder mehrere Knoten gemäß der vorliegenden Offenbarung.

Der Knoten und das Netzwerk können konfiguriert sein, um ein beliebiges Verfahren oder eine beliebige Kombination von Verfahren gemäß der vorliegenden Offenbarung durchzuführen.

Ein Computerprogramm umfasst Befehle, die bei der Ausführung des Programms durch einen Prozessor diesen veranlassen, die Schritte eines beliebigen Verfahrens gemäß der vorliegenden Offenbarung auszuführen.

Ein elektronisch lesbarer Datenträger umfasst Befehle, die bei der Ausführung durch einen Prozessor diesen veranlassen, die Schritte eines beliebigen Verfahrens gemäß der vorliegenden Offenbarung auszuführen.

Für ein solches Netzwerk, Computerprogramm und elektronisch lesbaren Datenträger können technische Effekte erzielt werden, die den technischen Effekten für die Verfahren gemäß der vorliegenden Offenbarung entsprechen.

Obwohl die in der obigen Zusammenfassung und der folgenden detaillierten Beschreibung beschriebenen Merkmale im Zusammenhang mit spezifischen Beispielen beschrieben werden, ist zu verstehen, dass die Merkmale nicht nur in den jeweiligen Kombinationen verwendet werden können, sondern auch isoliert oder in beliebigen Kombinationen verwendet werden können, und Merkmale aus verschiedenen Beispielen für die Verfahren, Netzwerkknoten und IoT-Infrastrukturen, miteinander kombiniert werden können und miteinander korrelieren, sofern nicht ausdrücklich anders angegeben.

Die obige Zusammenfassung soll daher nur einen kurzen Überblick über einige Merkmale einiger Ausführungsformen und Implementierungen geben und ist nicht als Einschränkung zu verstehen. Andere Ausführungsformen können andere als die oben beschriebenen Merkmale umfassen.

### Kurze Beschreibung der Zeichnungen

Die Erfindung wird nachfolgend anhand bevorzugter Ausführungsbeispiele mit Bezug auf die beiliegenden Zeichnungen näher erläutert.

Dabei bezeichnen in den Figuren gleiche Bezugszeichen gleiche oder ähnliche Elemente. Die Figuren sind schematische Darstellungen verschiedener Ausführungsbeispiele der Erfindung, wobei die in den Figuren dargestellten Elemente nicht notwendigerweise maßstabsgetreu dargestellt sind. Vielmehr sind die verschiedenen in den Figuren dargestellten Elemente derart wiedergegeben, dass ihre Funktion und genereller Zweck für den Fachmann verständlich wird.
Figur 1 zeigt schematisch einen Netzwerkknoten, gemäß Ausführungsbeispielen der Erfindung.
Figur 2 zeigt schematisch eine IoT-Infrastruktur, gemäß Ausführungsbeispielen der Erfindung.
Figur 3 zeigt schematisch eine digitale Simulation der IoT-Infrastruktur der Figur 2, gemäß Ausführungsbeispielen der Erfindung.
Figur 4 zeigt ein Flussdiagramm mit Schritten für einen Netzwerkknoten, gemäß Ausführungsbeispielen der Erfindung.

### Detaillierte Beschreibung

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, welche im Zusammenhang mit den Figuren näher erläutert werden.

Die Zeichnungen sind als schematische Darstellungen zu betrachten und die in den Zeichnungen dargestellten Elemente sind nicht unbedingt maßstabsgetreu dargestellt. Vielmehr werden die verschiedenen Elemente so dargestellt, dass ihre Funktion und ihr allgemeiner Zweck für einen Fachmann ersichtlich werden.

Dabei ist zu beachten, dass die Beschreibung der Ausführungsbeispiele nicht im in einem beschränkenden Sinne zu verstehen ist. Der Umfang der Erfindung soll nicht durch die im Folgenden beschriebenen Ausführungsbeispielen oder durch die Figuren eingeschränkt werden, welche nur zur Veranschaulichung dienen.

Nachfolgend werden verschiedene Techniken zur Steuerung von Prozessen in einer IoT-Infrastruktur, insbesondere eine Digital-Twin-basierte Ausführungsoptimierung von Steuerbefehlen in einer Netzwerkapplikation, z. B. eine verteilte Datenbank oder einem heterogenen IoT-Netzwerk, beschrieben.

Besonders vorteilhaft können die offenbarten Techniken in einem dezentralen Steuerungsnetzwerk eines technischen Systems, insbesondere einem IoT-Netzwerk mit IoT-Geräten und Edge-Geräten als Knoten, eingesetzt werden. Das dezentrale Steuerungsnetzwerk kann beispielsweise eine Netzwerkapplikation, eine verteilte Datenbank, eine DLTbasierte Datenbank, oder eine Blockchain umfassen, oder als solche ausgebildet sein. In einer derartigen dezentralen verteilten Netzwerkstruktur können beispielsweise eine Vielzahl von gleichberechtigten Knoten untereinander Daten austauschen, weiterleiten, senden, empfangen und/oder manipulationssicher in einer DLT basierten Datenbank, beispielsweise einer Blockchain, manipulationssicher speichern.

Verschiedene Beispiels zeigen eine Validierung von Transaktionen für ein Internet-of-Things (IoT) -Netzwerk mit Hilfe eines Digitalen Zwillings. Ein Knoten des Netzwerks überträgt eine Transaktion, die in dem IoT-Netzwerk ausgeführt werden soll, und eine Validierungsanforderung der Transaktion an einen Digitalen Zwilling des IoT-Netzwerks. Durch ein simuliertes Ausführen der Transaktion wird festgestellt, ob die Transaktion entsprechend der Validierungsanforderung ausgeführt werden kann. Erst nach erfolgreicher Simulation validiert der Knoten die Transaktion für das IoT-Netzwerk und überträgt die Transaktion für eine verteilte Speicherung innerhalb des IoT-Netzwerks.

Ein Knoten kann somit beispielsweise einen Netzwerkknoten (z. B. der Netzwerkapplikation), Datenbankknoten, IoT-Gerät oder Edge-Gerät eines industriellen IoT-Systems, ein Steuergerät für eine Komponente eines technischen Systems, ein Knoten einer Blockchain oder einer DLT basierten Datenbank, oder eine beliebige Kombination davon umfassen. Der Begriff Knoten, oder Netzwerkknoten soll im Zusammenhang der Erfindung derart ausgelegt werden, dass er elektronische Geräte einschließt, welche Daten verarbeiten und/oder speichern können, sowie beispielsweise eine Komponente eines technischen Systems einschließen kann. Netzwerknoten können einen Prozessor, einen Speicher, und eine Schnittstelle zu einem Steuerungsnetzwerk enthalten.

Eine Transaktion kann beispielsweise einer oder mehrere Dateneinheiten, Datenblöcke, Steuerbefehle, Steuerinformationen, Sensordaten eines technischen Systems, von einem Benutzer eingegebene Daten, und im allgemeinen Daten, welche in dem Netzwerk erzeugt wurden, oder welche von dem Netzwerk erhalten werden, und/oder verteilt werden, umfassen. Insbesondere kann eine Transaktion einen oder mehrere Datenblöcke umfassen, welche innerhalb einer Netzwerkapplikation wie eine DLT basierten Datenbank, insbesondere einer Blockchain, gespeichert werden. Eine Transaktion kann beispielsweise auch als Nachricht, welche eine Datenstruktur umfasst, ausgebildet sein, die Dateneinheiten, Datenblöcke, Steuerbefehle, Steuerinformationen, Sensordaten eines technischen Systems, von einem Benutzer eingegebene Daten, und im allgemeinen Daten, welche in dem Netzwerk erzeugt wurden, oder welche von dem Netzwerk erhalten werden, und/oder verteilt werden, umfasst.

Eine "Netzwerkapplikation" oder eine "verteilte Datenbank" (kann z. B. auch als verteiltes Datenbanksystem bezeichnet werden) kann eine Datenbank oder Netzwerkapplikation sein, die über eine Vielzahl von Berechnungsknoten (z. B. Netzwerkknoten) verteilt ist, wobei Transaktionen an die Netzwerkapplikation oder Datenbank von einem Konsens zwischen den Netzwerkknoten abhängen und wobei die Netzwerkknoten geographisch über mehrere Standorte, Orte, Länder oder Organisationen verteilt sein können. Ein solcher Konsens kann durch einen Konsensalgorithmus wie beispielsweise Proof-of-Work, Proof-of-Stake oder ein Abstimmungssystem hergestellt werden. Insbesondere kann die Netzwerkapplikation oder die verteilte Datenbank als Blockkette (engl. blockchain) implementiert sein.

Unter einer Blockkette bzw. Blockchain wird im allgemeinen eine in der Regel verteilte Datenbank verstanden, deren Integrität (Sicherung gegen nachträgliche Manipulation) durch Speicherung des Einwegfunktionswertes, auch Hashwert genannt, des vorangehenden Datensatzes bzw. Blocks bzw. Glieds im jeweils nachfolgenden, also durch kryptographische Verkettung, gesichert ist. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Einmal in der Kette auftauchende Transaktionen sind nicht mehr unbemerkt veränderbar.

Eine Konnektivität verschiedener Geräte in einer industriellen Umgebung mit dem Internet kann als sogenanntes IoT (Internet der Dinge) bezeichnet werden, welches als Überbegriff für ein Netzwerk heterogener Geräte - z.B. IoT-Geräte - verwendet wird, die miteinander interagieren und miteinander kommunikativ verbunden sind. So können Geräte und Systeme, die z.B. an industriellen Fertigungsprozessen oder Endprodukten eines solchen Herstellungsprozesses beteiligt sind, mit Cloud-Plattformen oder dem Internet oder einer IoT-Infrastruktur, im Allgemeinen einem Kommunikationsnetzwerk, verbunden sein und Daten austauschen, z.B. um einen Prozess zu steuern, ohne dass eine Interaktion von Mensch zu Mensch oder von Mensch zu Computer erforderlich ist.

Unter einem IoT-Netzwerk versteht man im Allgemeinen ein Netzwerk miteinander verbundener Dinge oder Geräte, die mit Sensoren, Software, Netzwerkkonnektivität und Elektronik ausgestattet sind, die es ihnen ermöglichen, Daten zu sammeln und auszutauschen. Ein IoT-Gerät kann ein beliebiges an ein Netzwerk anschließbares Gerät oder System mit Sensor- oder Steuerfunktionalität umfassen. Ein IoT-Gerät kann mit einem lokalen Netzwerk (LAN), einem Personal Area Network (PAN) und einem Wide Area Network (WAN) verbunden werden. Beispielsweise kann ein IoT-Gerät ein oder mehrere Funkgeräte enthalten, die mit einem oder mehreren Kommunikationsprotokollen arbeiten, die es dem IoT-Gerät ermöglichen, sich mit einem oder mehreren LANs oder PANs zu verbinden, wie z.B. WiFi, ZigBee, Bluetooth, Bluetooth Low Energy (BLE), Infrared Data Association, Transmission Control Protocol (TCP), User Datagram Protocol (UDP) und jedes andere geeignete Protokoll, das eine Verbindung zu einem LAN ermöglicht.

Ein Netzwerk, oder Netzwerkapplikation, wie beispielsweise ein P2P-Kommunikationssystem, Cloud, Distributed Ledger, Blockchain oder eine verteilte Datenbank erlaubt die Implementierung eines verteilten IoT-Ökosystems mit verschiedenen Stakeholdern, die sich nicht zwangsläufig vertrauen. Mittels einer solchen Netzwerkapplikation ist es möglich eine P2P-Infrastruktur mit verschiedenen Stakeholdern zu realisieren, wobei ein Vertrauen selbst in einer nicht vertrauenswürdigen Umgebung durch technische Maßnahmen realisiert werden kann.

Die Technologie von Blockketten (engl. Blockchains) bzw. "Distributed Ledger" ist aktuell eine intensiv diskutierte Technologie, die insbesondere als verteiltes Datenbanksystem oder als Netzwerkapplikation realisiert sein kann. Neben Anwendungen für dezentrale Bezahlsysteme (z. B. Bit-Coin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, beispielsweise eine zentrale Instanz, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "anpassen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollten die Begriffe "Computer", Knoten, oder Netzwerkknoten, oder IoT-Gerät möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, IoT-Geräte Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem Speicher, einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen des entsprechenden Moduls ausführt oder um das erfindungsgemäße Verfahren oder einen Schritt des erfindungsgemäßen Verfahrens zu implementieren oder zu realisieren. Es kann beispielsweise ein Prozessor derart ausgebildet sein, dass dieser die Funktionen von mehreren Modulen realisiert.

Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerkapplikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerkapplikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerkapplikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerkapplikation) den vorhergehenden Datenblock des verteilten Datenbanksystems (oder der Netzwerkapplikation) angibt bzw. referenziert (in der Fachliteratur insbesondere häufig als "previous block hash" bezeichnet). Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerkapplikation) verwendet werden, um einen neuen Datenblock mit einem (vorhandenen) Datenblock des verteilten Datenbanksystems (oder der Netzwerkapplikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerkapplikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerkapplikation) sein, eine Transaktionsprüfsumme eines Datenblocks mit den entsprechenden Daten (des verteilten Datenbanksystems oder der Netzwerkapplikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank oder einer anderen Netzwerkapplikation, welche die Daten umfasst) umfassen. Die entsprechenden Daten könnten dann beispielsweise auch in einer weiteren Transaktion eines weiteren Datenblocks des verteilten Datenbanksystems oder der Netzwerkapplikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems oder der Netzwerkapplikation möglichst gering zu halten.

Unter "Verketten der/von Datenblöcken eines verteilten Datenbanksystems oder einer Netzwerkapplikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerkapplikation) verweisen bzw. diese referenzieren.

Unter "Einfügen in das verteilte Datenbanksystem oder die Netzwerkapplikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems oder einer Netzwerkapplikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems oder der Netzwerkapplikation verkettet. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockchain as a Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerkapplikation) verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Beispielsweise kann auch eine entsprechende Transaktion einen Smart-Contract umfassen. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder eine Bestätigungstransaktion mit einer Bestätigungsnachricht und/oder eine Ausführungsbestätigungstransaktion mit einer Ausführungsbestätigungsnachricht verstanden werden. Eine Ausführungsbestätigungsnachricht kann beispielsweise eine Bestätigung für eine Ausführung der Steuerbefehle der Steuertransaktion durch eines der Geräte umfassen, wenn ein entsprechendes Gerät der Geräte die Steuerbefehle der Steuertransaktion erfolgreich ausgeführt hat. Hierzu kann die Ausführungsbestätigungsnachricht beispielsweise eine von dem entsprechenden Gerät erzeugte Prüfsumme (z. B. eine Transaktionsprüfsumme) über die ausgeführten Steuerbefehle umfassen und/oder eine Bestätigung der Ausführung umfassen, die z. B. von der Prüfsumme ebenfalls geschützt ist. Eine Ausführungsbestätigungsnachricht kann beispielsweise auch in dem verteilten Datenbanksystem oder der Netzwerkapplikation gespeichert werden, wenn das Gerät die Steuerbefehle teilweise ausführt und/oder die Ausführung der Steuerbefehle unterbrochen wird. Dies kann z. B. der Fall sein, wenn während der Ausführung der Steuerbefehle ein Defekt an dem Gerät aufgetreten ist, der die Ausführung der Steuerbefehle nicht mehr erlaubt (z. B. trat ein Defekt an einem Aktor oder Werkzeug auf). Beispielsweise kann ein anderes Gerät, das beispielsweise die Ausführungsanforderungen, oder in anderen Worten die Validierungsanforderungen, für die verbleibenden unausgeführten Steuerbefehle erfüllt, dann anhand der Ausführungsbestätigungsnachricht diese unausgeführten Steuerbefehle der entsprechenden Steuertransaktion ausführen. Entsprechend kann die Ausführungsbestätigungsnachricht beispielsweise den Grad der Ausführung bzw. eine Angabe über den ausgeführten Teil der Steuerbefehle umfassen. Alternativ oder zusätzlich kann eine Ausführungsbestätigungsnachricht die Steuerbefehle angeben, die für eine erfolgreiche Ausführung der Steuerbefehle einer entsprechenden Steuertransaktion noch ausgeführt werden müssen. Entsprechend kann beispielsweise eine Ausführungsbestätigungsnachricht einen Datensatz umfassen, der angibt, welche der Steuerbefehle noch auszuführen sind bzw. der angibt, welche der Steuerbefehle für die erfolgreiche Ausführung der Steuerbefehle einer entsprechenden Steuertransaktion fehlen. Hierdurch wird beispielsweise ermöglicht, dass eine Weiterverarbeitung der Steuerbefehle erfolgen kann, selbst wenn die Ausführung der Steuerbefehle bei einem Gerät unterbrochen wurde. Entsprechend kann beispielsweise in den Ausführungsanforderungen gefordert sein, dass mehr als ein Gerät (z. B. zwei oder drei Geräte oder mehr Geräte) die Ausführungsanforderungen erfüllt, damit eine Ausführung der Steuerbefehle auch garantiert ist, selbst wenn z. B. ein Gerät während der Ausführung der Steuerbefehle einer entsprechenden Steuertransaktion ausfällt.

Alternativ kann eine Transaktion beispielsweise eine Datenstruktur sein, die Daten speichert (z. B. die Steuerbefehle). Eine Transaktion kann beispielsweise auch als Nachricht (also eine Kommunikationsnachricht, welche Daten speichert) bezeichnet werden bzw. eine Nachricht sein, die z. B. entsprechende Daten (z. B. Steuerbefehle) speichert. Mit der Erfindung können somit entsprechende Transaktionen oder Nachrichten ausgetauscht werden. Transaktionen können dabei z. B. die Steuerbefehle und/oder Vertragsdaten und/oder andere Daten wie Videodaten, Nutzerdaten, Messdaten etc. umfassen.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems oder der Netzwerkapplikation) oder die entsprechende Transaktion des verteilten Datenbanksystems oder der Netzwerkapplikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem oder die Netzwerkapplikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem oder die Netzwerkapplikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems oder der Netzwerkapplikation ausgeführt. Dabei wird beispielsweise eine virtuelle Maschine durch die Infrastruktur des verteilten Datenbanksystems (oder der Netzwerkapplikation) realisiert.

Unter einem "Smart Contract" kann im Zusammenhang mit der Erfindung beispielsweise ein ausführbarer Programmcode verstanden werden(siehe insbesondere Definition "Programmcode"). Der Smart Contract ist vorzugsweise in einer Transaktion eines verteilten Datenbanksystems oder der Netzwerkapplikation (z. B. eine Blockkette) gespeichert, beispielsweise in einem Datenblock des verteilten Datenbanksystems (oder der Netzwerkapplikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem oder durch die Netzwerkapplikation verstanden werden, wobei beispielsweise die entsprechende Infrastruktur des verteilten Datenbanksystems oder der Netzwerkapplikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt oder Inhalt einer bestimmten Transaktion zu lösen ist. Eine solche rechenintensive Aufgabe wird beispielsweise auch als kryptographisches Puzzle bezeichnet.

Unter einer "Netzwerkapplikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein Distributed Ledger, ein verteiltes Speichersystem, ein Distributed Ledger Technology (DLT) basiertes System (DLTS) , ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerkapplikation (oder auch als Netzwerkapplikation bezeichnet) ein verteiltes Datenbanksystem sein, das z. B. mittels einer Blockkette oder einem Distributed Ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting). Wird beispielsweise eine Blockkette verwendet, so kann diese insbesondere mittels einer Bitcoin-basierten Realisierung oder einer Ethereum-basierten Realisierung umgesetzt werden. Unter einem "verteilten Datenbanksystem" oder einer "Netzwerkapplikation" kann beispielsweise auch ein verteiltes Datenbanksystem oder eine Netzwerkapplikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerkapplikation kann es sich beispielsweise um ein öffentliches verteiltes Datenbanksystem oder eine öffentliche Netzwerkapplikation (z. B. eine öffentliche Blockkette) oder ein geschlossenes (oder privates) verteiltes Datenbanksystem oder eine geschlossene Netzwerkapplikation (z. B. eine private Blockkette) handeln.

Handelt es sich beispielsweise um ein öffentliches verteiltes Datenbanksystem oder eine öffentliche Netzwerkapplikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerkapplikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerkapplikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerkapplikation beitreten zu können bzw. von diesem akzeptiert zu werden.

Bei einem verteilten Datenbanksystem oder bei der Netzwerkapplikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einem "Netzwerk" kann es sich beispielsweise auch um eine Netzwerkapplikationsinfrastruktur handeln oder das Netzwerk umfasst eine entsprechende Netzwerkapplikationsinfrastruktur. Diese Infrastruktur kann beispielsweise Knoten und/oder Kommunikationsnetze und/oder Datenschnittstellen und/oder weitere Komponenten umfassen, um die Netzwerkapplikation zu realisieren oder auszuführen. Bei der Netzwerkapplikation kann es sich z. B. um eine verteilte Netzwerkapplikation (z. B. eine verteilte Peer-to-Peer Applikation oder ein verteiltes Datenbanksystem) handeln, die beispielsweise auf mehreren Knoten der Netzwerkapplikationsinfrastruktur ausgeführt wird.

Unter Dateneinheit oder "Datenblock" der insbesondere je nach Kontext und Realisierung auch als "Glied" oder "Block" bezeichnet sein kann, kann im Zusammenhang mit der Erfindung beispielsweise ein Datenblock eines verteilten Datenbanksystems oder einer Netzwerkapplikation (z. B. eine Blockkette oder eine Peer-to-Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen. Bei einem Datenblock kann es sich beispielsweise auch nur um einen bestimmten Speicherbereich oder Adressbereich der Gesamtdaten handeln, die in dem verteilten Datenbanksystem oder der Netzwerkapplikation gespeichert sind. Damit lassen sich beispielsweise blocklose (engl. blockless) verteilte Datenbanksysteme oder Netzwerkapplikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems oder der Netzwerkapplikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem oder der Netzwerkapplikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Beispielsweise können zusätzlich zu einer Prüfsumme über die Transaktionen auch eine Prüfsumme über den "State", d. h. die Zustände der Smart-Contracts und/oder der Konten und/oder über die Rückgabewerte der Transaktionen (engl. Transaction Receipts) z. B. in die Transaktion und/oder den Datenblock eingefügt werden.

Unter "Nonce" kann im Zusammenhang mit der Erfindung beispielsweise eine kryptographische Nonce verstanden werden (Abkürzung für: "used only once" oder "number used once"). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems oder der Netzwerkapplikation" kann im Zusammenhang mit der Erfindung beispielsweise der Datenblock des verteilten Datenbanksystems oder der Netzwerkapplikation verstanden werden, der insbesondere einem (bestimmten) Datenblock direkt vorhergeht. Alternativ können unter "vorhergehender Datenblöcke eines (bestimmten) Datenblockes des verteilten Datenbanksystems oder der Netzwerkapplikation" insbesondere auch alle Datenblöcke des verteilten Datenbanksystems oder der Netzwerkapplikation verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", Netzwerkknoten, "Knoten", "Knoten eines verteilten Datenbanksystems der Netzwerkapplikation" und dergleichen, können im Zusammenhang mit der Erfindung beispielsweise Geräte (z. B. Feldgeräte, Mobiltelefone), Rechner, Smartphones, Clients oder Teilnehmer verstanden werden, die Operationen (mit) dem verteilten Datenbanksystem oder der Netzwerkapplikation (z. B. eine Blockkette) durchführen. Solche Geräte können mit einer Komponente eines technischen Systems verbunden sein. Solche Knoten können beispielsweise Transaktionen eines verteilten Datenbanksystems oder einer Netzwerkapplikation bzw. deren Datenblöcke ausführen oder neue Datenblöcke mit neuen Transaktionen in das verteilte Datenbanksystem oder die Netzwerkapplikation mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem oder der Netzwerkapplikation, eine Knotenprüfsumme (z. B. eine digitale Signatur oder ein Zertifikat) in dem neuen Datenblock speichern. Bei der Knotenprüfsumme kann es sich dabei beispielsweise um eine von einem entsprechenden Knoten signierte Prüfsumme z. B. eines Datenblocks oder einer Transaktion handeln. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder einer industriellen Anlage und/oder eines Automatisierungsnetzes und/oder einer Fertigungsanlage, die insbesondere auch ein Knoten des verteilten Datenbanksystems oder der Netzwerkapplikation sind. Dabei können die Geräte beispielsweise Feldgeräte sein oder Geräte im Internet der Dinge sein, die insbesondere auch ein Knoten des verteilten Datenbanksystems oder der Netzwerkapplikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise über Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakels löscht). Das Sicherheitsmodul kann dabei beispielsweise kryptographische Schlüssel umfassen, die z. B. für die Signatur der Transaktion und/oder für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smartphone, ein Server, die jeweils außerhalb der Blockkette angeordnet sind bzw. kein Teilnehmer des verteilten Datenbanksystems oder der Netzwerkapplikation (z. B. der Blockkette) sind (also keine Operationen mit dem verteilten Datenbanksystem oder der Netzwerkapplikation durchführen oder diese nur abfragen, ohne jedoch Transaktionen durchzuführen, Datenblöcke einzufügen oder Proof-of-Work-Nachweise zu berechnen), verstanden werden. Alternativ kann insbesondere auch unter einem Rechner ein Knoten des verteilten Datenbanksystems oder der Netzwerkapplikation verstanden werden. Mit anderen Worten kann insbesondere unter einem Gerät ein Knoten des verteilten Datenbanksystems oder der Netzwerkapplikation verstanden werden oder auch ein Gerät außerhalb der Blockkette bzw. des verteilten Datenbanksystems oder der Netzwerkapplikation verstanden werden. Ein Gerät außerhalb des verteilten Datenbanksystems oder der Netzwerkapplikation kann beispielsweise auf die Daten (z. B. Transaktionen oder Steuertransaktionen) des verteilten Datenbanksystems oder der Netzwerkapplikation zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems oder der Netzwerkapplikation) durch einen Knoten realisiert, kann dies z. B. mittels eines Smart-Contracts erfolgen, der insbesondere in einer Transaktion des verteilten Datenbanksystems oder der Netzwerkapplikation gespeichert ist. Ein Rechner oder ein Gerät kann beispielsweise auch ein Teil der Infrastruktur sein, die z. B. die Netzwerkapplikation oder das verteilte Datenbanksystem ausführt, realisiert oder umfasst.

Unter "Steuerbefehle" oder "Steuertransaktionen" können im Zusammenhang mit der Erfindung beispielsweise ein Smart-Contract oder ausführbarer Programmcode verstanden werden, der insbesondere durch das technische System, oder die Netzwerkapplikation oder das verteilte Datenbanksystem oder durch entsprechende Geräte ausgeführt wird, wobei beispielsweise das verteilte Datenbanksystem bzw. dessen Knoten und Infrastruktur die entsprechenden Steuerbefehle abarbeitet bzw. umsetzt. Insbesondere ergeben mehrere Steuerbefehle oder Steuertransaktionen aus einem oder mehreren Datenblöcken eine Befehlsfolge. Mittels der Steuerbefehle werden insbesondere eine Fertigungsanlage mit den zugehörigen Fertigungsmaschinen (z. B. Geräte) gesteuert, die Geräte eines Automatisierungsnetzes gesteuert oder die Geräte eines Energieversorgungsnetzes gesteuert oder Geräte im Internet der Dinge gesteuert. Insbesondere sind in den Steuerbefehlen oder Steuertransaktionen (also auch in den Befehlsfolgen) die Fertigungsanweisungen oder Fertigungsschritte für ein Produkt und dessen Herstellung kodiert. Mit den Steuerbefehlen oder Steuertransaktionen werden beispielsweise Geräte gesteuert, indem beispielsweise ein Gerät die entsprechenden Steuerbefehle ausführt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder Geräte im Internet der Dinge, die insbesondere auch ein Knoten des verteilten Datenbanksystems sind. Dabei können die Geräte beispielsweise Feldgeräte sein, die insbesondere auch ein Knoten des verteilten Datenbanksystems sind. Die Geräte können beispielsweise auch Bankautomaten sein, wobei die Steuerbefehle eine Geldauszahlung veranlassen. Beispielsweise können die Steuerbefehle aus einer Befehlsfolge abgeleitet werden bzw. aus diesen bestimmt werden. Beispielsweise kann eine Steuertransaktion einen oder mehrere Steuerbefehle umfassen. Beispielsweise kodieren die Steuerbefehle mechanische Bewegung und/oder andere physikalische Größen (z. B. Druck oder Temperatur), die von einem entsprechenden Gerät/Knoten (z. B. durch einen entsprechenden Aktor) in die entsprechende mechanische Bewegung und/oder die entsprechende andere physikalische Größen umgesetzt werden. Mit den Steuerbefehlen werden dann beispielsweise Aktoren der Geräte und/oder Knoten gesteuert. Entsprechend umfasst ein entsprechendes Gerät/Knoten beispielsweise einen Aktor. Ist ein Gerät/Knoten beispielsweise ein Roboter, so würde ein Aktor auch als Effektor bezeichnet werden. Bei einem Gerät kann es sich beispielsweise auch um ein mechatronisches Gerät oder System handeln, wobei ein mechatronisches Gerät/System beispielsweise ein Aktor und/oder ein lineartechnisches Gerät ist. Ein lineartechnisches Gerät ist beispielsweise ein Gerät zur Ausführung translativer Bewegungen. Bei einem entsprechenden Gerät kann es sich beispielsweise auch um ein Antriebssystem handeln. Mittels der Steuerbefehle und der Geräte und/oder Knoten kann beispielsweise auch ein Regelkreis geregelt und/oder gesteuert werden, indem beispielsweise die Ausführungsbestätigungsnachrichten für ausgeführte Steuerbefehle durch die Vorrichtung oder durch die Netzwerkapplikation ausgewertet werden und entsprechende Steuerbefehle als Reaktion auf die Ausführungsbestätigungsnachrichten erzeugt werden. Für diese neuen Steuerbefehle werden dann beispielsweise wieder entsprechende Ausführungsanforderungen bestimmt oder abgerufen und diese werden dann beispielsweise wieder Steuertransaktionen zugeordnet, damit diese beispielsweise - wie in der Erfindung beschrieben - von den entsprechenden Geräten für die Ausführung der Steuerbefehle berücksichtigt werden. Bei den Steuerbefehlen kann es sich beispielsweise auch um Steuerbefehle zum Steuern von kryptographischen Geräten und/oder Verfahren handeln (z. B. eine Nutzerauthentisierung oder Nutzerauthentifizierung).

Unter Steuerbefehlen können beispielsweise auch Befehlsfolgen oder auch Transaktionen aus einer Datenbank bzw. eines Datenbanksystems oder eine Netzwerkapplikation verstanden werden, die durch Geräte oder Knoten des verteilten Datenbanksystems oder der Netzwerkapplikation ausgeführt werden sollen. Bei einer Netzwerkapplikation wie z. B. einem Datenbanksystem kann es sich beispielsweise um das verteilte Datenbanksystem handeln, wenn es z. B. Transaktionen gibt, denen noch keine Ausführungsanforderungen zugewiesen bzw. zugeordnet wurden. Alternativ oder zusätzlich kann das Datenbanksystem eine andere Datenbank sein, z. B. eine konventionelle hierarchische Datenbank, von der die entsprechenden Transaktionen abgerufen werden können. Unter Steuerbefehle können beispielsweise auch Befehlsfolgen oder auch Transaktionen verstanden werden, die durch ein Eingabesystem bereitgestellt werden und die von dem verteilten Datenbanksystem oder der Netzwerkapplikation ausgeführt werden sollen. Unter Steuerbefehlen können beispielsweise Befehlsfolgen oder Steuerbefehle verstanden werden, mit denen mechanische und/oder elektrische und/oder elektromechanische und/oder elektronische Geräte gesteuert werden.

Unter Validierungsanforderungen, in anderen Worten Ausführungsanforderungen oder Anforderungen, können im Zusammenhang mit der Erfindung beispielsweise Eigenschaften verstanden werden, die ein Gerät für eine Ausführung der Steuertransaktion oder der Steuerbefehle einhalten muss. Beispielsweise können die Validierungsanforderungen zeitliche Anforderungen an eine Ausführung der Transaktion umfassen, beispielsweise die Anforderung an eine bestimmte Reihenfolge von ausführenden Knoten, eine Anforderung an eine Interaktion zwischen zwei ausführenden Knoten, eine Interdependenz zwischen ausführenden Knoten, einen bestimmten Zeitpunkt für ein Fertigstellen der Transaktion, beispielsweise eine bestimmte Zeitdauer für das Durchführen der Transaktion. Beispielsweise können die Validierungsanforderungen Geräteanforderungen umfassen. Mittels der Geräteanforderungen kann beispielsweise ein bestimmtes vorgegebenes Gerät sein, das z. B. die Steuerbefehle bzw. die Steuertransaktion ausführen sollen. Mit anderen Worten werden beispielsweise durch die Geräteanforderungen Vorgaben festgelegt, die ein Gerät, das die Steuerbefehle ausführen soll, erfüllen muss. Die Geräteanforderungen werden dabei z. B. anhand von Geräteeigenschaften eines entsprechenden Gerätes überprüft. Die Geräteanforderungen legen z. B. durch einen eindeutigen Identifizierer fest, welche Geräte die vorgegebenen Steuerungsaktionen durchführen können bzw. sollen (z. B. ein Fertigungsroboter, der Metallteile verschweißen kann; ein Lackierroboter, der vorgegebene Farben auf ein Fertigungsteil auftragen kann; Geräte, die in einem Umspannwerk elektrische Verbindungen automatisiert herstellen). Es kann z. B. auch ein Gerät vorgegeben sein, das die Fertigungsschritte bzw. Steuerbefehle mit einer vorgegebenen Präzision und/oder Geschwindigkeit ausführt (z. B. Drehbänke, Fräsen und Schneidemaschinen). Alternativ oder zusätzlich können "Geräteanforderungen" auch bestimmte Geräteklassen voraussetzen, die für eine Ausführung oder Abarbeitung der Steuerbefehle vorgegeben werden. Insbesondere wird dabei unter einer Geräteklasse ein oder mehrere Geräte (z. B. Schleifgeräte oder Sägegeräte) verstanden, die beispielsweise in der Lage sind, bestimmte vorgegebene Aktionen auszuführen (z. B. ein bestimmtes Material schleifen oder sägen). Insbesondere sind die Geräteanforderungen (die auch als gerätespezifischen Anforderungen bezeichnet werden können) die Anforderungen, die zum Ausführen der Steuerbefehle an die entsprechenden Geräte und/oder Knoten gestellt werden. Die Geräteeigenschaften (die auch als gerätespezifische Daten bezeichnet werden können) entsprechen dann beispielsweise den tatsächlichen und/oder aktuellen Geräteeigenschaften eines Gerätes. Beispielsweise wird überprüft, ob ein Gerät bzw. eine Fertigungsmaschine in der Lage ist, die Steuerbefehle mit der vorgegebenen Präzision, die z. B. in den gerätespezifischen Anforderungen vorgegeben sind, auszuführen. Insbesondere können gerätespezifische Anforderungen auch als maschinelle und/oder mechatronische und/oder fertigungsspezifische Anforderungen bezeichnet werden. Insbesondere können gerätespezifische Daten oder Geräteeigenschaften auch als maschinelle und/oder mechatronische und/oder fertigungsspezifische Daten oder Geräteeigenschaften bezeichnet werden. Insbesondere können gerätespezifische Daten oder Geräteeigenschaften auch als Geräteinformationen bezeichnet werden. Insbesondere geben die Geräteanforderungen die Anforderungen vor, die durch die gerätespezifischen Daten eines Gerätes erfüllt sein sollen. Mit anderen Worten geben die Geräteanforderungen einen "Soll"-Wert vor, der mit dem "Ist"-Wert von den Geräten abgeglichen wird. Die gerätespezifischen Daten stellen dabei insbesondere die aktuellen Geräteeigenschaften dar. Diese Geräteeigenschaften bzw. gerätespezifischen Daten umfassen beispielsweise die UID eines Gerätes bzw. eines Systems, verfügbare Werkzeuge oder unterstützte Fertigungsverfahren (fräsen, schleifen oder 3D-drucken), Fertigungspräzision, Fertigungskosten, Standort der Geräte, Netzwerkadresse zum Ansprechen/Ansteuern des Gerätes, berechtigte Nutzer usw.

Die Validierungsanforderungen können beispielsweise auch Sicherheitsanforderungen oder ortsbezogene Anforderungen (z. B. eine Länderangabe, eine GPS-Angabe oder Postleitzahl (PLZ)) sein oder diese umfassen, die ein Gerät für die Ausführung der Steuerbefehle erfüllen soll. Beispielsweise kann gefordert sein, dass das Gerät vorgegebene Sicherheitseinrichtungen aufweisen soll oder für die Ausführung der Steuerbefehle am Gerät noch eine bestimmte oder eine vorgegebene Authentisierung und/oder Authentifizierung notwendig ist. Dies kann beispielsweise der Fall sein, wenn jemand an einem Gerät (z. B. einem Geldautomaten) sich Bargeld auszahlen lassen möchte. Die Steuerbefehle sind dann beispielsweise die Anforderung des Kunden eine Geldauszahlung vorzunehmen. Hat beispielsweise ein entsprechender Kunde konfiguriert, dass er z. B. nur in vorgegebenen Ländern, z. B. Italien, Frankreich und Österreich, eine Bargeldauszahlung erlaubt, so wird dies in den gerätespezifischen Anforderungen (und insbesondere ggf. implizit in den Ausführungsanforderungen ebenfalls) gespeichert. Ein Geldautomat in Andorra würde dann ggf. keine Auszahlung erlauben bzw. diese unterbinden. Alternativ kann dies z. B. auch durch einen anderen Knoten des verteilten Datenbanksystems unterbunden werden oder durch einen Smart-Contract des verteilten Datenbanksystems unterbunden werden. Auch kann beispielsweise durch die Sicherheitsanforderungen eine spezifische Authentifizierung des Kunden gefordert sein. Beispielsweise, dass ein Pin für ein Auszahlung eingegeben wird (was z. B. in den USA nicht zwangsläufig der Fall ist) und/oder eine bestimmte Pin-Länge gefordert ist (z. B. 8 Zeichen) und/oder, dass andere zusätzliche Authentisierungsverfahren gefordert sind (z. B. 2 Faktor-Authentisierung, Mobile-Tan, Google Authenticator).

Alternativ kann das Bestimmungsmodul die Steuerbefehle auch weiter analysieren und, wenn beispielsweise das Bestimmungsmodul bereits feststellt, dass die Geräteanforderungen nicht erfüllt sind oder nicht erfüllbar sind, eine Steuertransaktion erstellen, die das entsprechende Gerät oder das System oder die Netzwerkapplikation darauf hinweist und ggf. eine Ausführung der Steuerbefehle unterbindet. Alternativ kann beispielsweise auch keine Steuertransaktion erzeugt werden und es gibt irgendwann einen Timeout für die Ausführung der Steuerbefehle, z. B. nach einem vorgegebenen Zeitraum, der vorzugsweise konfigurierbar ist.

Unter "systemspezifischen Daten" oder "gerätespezifische Daten" oder "Geräteeigenschaften" können im Zusammenhang mit der Erfindung beispielsweise auch Systemeigenschaften oder Geräteeigenschaften eines Gerätes oder eines technischen Systems verstanden werden. Die gerätespezifischen Daten oder systemspezifischen Daten oder Geräteeigenschaften sind beispielsweise aktuelle Geräteeigenschaften oder Systemeigenschaften. Die gerätespezifischen Daten oder systemspezifischen Daten (bzw. die entsprechenden Eigenschaften) können beispielsweise für ein technisches System, die Geräte eines technischen Systems oder ein Gerät folgende Daten umfassen: die UID des Gerätes bzw. des Systems, verfügbare Werkzeuge oder unterstützte Fertigungsverfahren (fräsen, schleifen oder 3D-drucken) des Gerätes bzw. des Systems, Fertigungspräzision des Gerätes bzw. des Systems, Fertigungskosten des Gerätes bzw. des Systems, Standort des Gerätes bzw. des Systems, Netzwerkadresse zum Ansprechen/Ansteuern des Gerätes bzw. des Systems, berechtigte Nutzer für das Gerät oder das System, Namen des Gerätes bzw. des Systems, usw.

Je nach gewählter Implementierung können beispielsweise die systemspezifischen Daten übergreifend für ein Gerät oder mehrere Geräte eines technischen Systems realisiert sein, indem z. B. über eine UID/(Netzwerk-)Adresse des technischen Systems auch die entsprechenden Geräte des technischen Systems adressiert, identifiziert oder mit diesen kommuniziert werden können. Alternativ oder zusätzlich können beispielsweise die gerätespezifischen Daten für das eine Gerät oder die mehreren Geräte des technischen Systems in den systemspezifischen Daten umfasst sein.

Unter einem "technischen System" können im Zusammenhang mit der Erfindung beispielsweise ein Gerät oder mehrere Geräte verstanden werden, die kommunikativ miteinander und/oder mit einem verteilten Datenbanksystem (z. B. das erste verteilte Datenbanksystem) und/oder mit der Netzwerkapplikation verbunden sind, beispielsweise eine maschinelle Anlage oder eine Produktionsanlage.

Unter "vorausgesetzte Steuerbefehle" können im Zusammenhang mit der Erfindung beispielsweise Steuerbefehle verstanden werden, die insbesondere durch andere Knoten (des verteilten Datenbanksystems) und/oder durch eines oder mehrere der Geräte bereits ausgeführt sein müssen, bevor die entsprechenden Steuerbefehle ausgeführt werden können. Insbesondere sind für diese vorausgeführten Steuerbefehle entsprechende Ausführungsbestätigungsnachrichten in dem verteilten Datenbanksystem oder der Netzwerkapplikation gespeichert (z. B. in Datenblöcken des verteilten Datenbanksystems), wenn z. B. die vorausgeführten Steuerbefehle durch Geräte oder Knoten erfolgreich ausgeführt wurden. Insbesondere werden bei diesen vorausgeführten oder vorausgesetzten Steuerbefehlen auch die diesen vorausgeführten Steuerbefehlen zugeordneten Geräteanforderungen mit überprüft bzw. mitberücksichtigt. Mittels der Ausführungsanforderungen wird insbesondere sichergestellt, dass beispielsweise eine Reihenfolge der Fertigungsschritte beim Erstellen eines Produktes eingehalten wird. Es wird damit beispielsweise erreicht, dass die Fertigungsreihenfolge in sinnvoller Weise eingehalten wird. Es wird z. B. verhindert, dass ein Fertigungsschritt durch einen anderen zerstört wird, nur weil die Fertigungsreihenfolge nicht eingehalten wurde. Auf ähnliche Weise kann insbesondere auch eine Steuerung von einem Energieversorgungsnetz gesteuert werden, indem z. B. Transformatoren oder Spannungskoppler in der richtigen Reihenfolge eingeschaltet oder mit dem Energieversorgungsnetz verbunden werden. Werden beispielsweise für das Ausführen von Steuerbefehlen bzw. Steuertransaktionen keine vorausgesetzten Steuerbefehle benötigt, können die vorausgesetzten Steuerbefehle leer sein. Beispielsweise können diese mit einer Null belegt sein, einem Leerstring belegt sein oder einem Wert, der angibt, dass keine vorausgesetzten Steuerbefehle notwendig sind. Alternativ können beispielsweise einem Teil der Steuerbefehle keine Ausführungsanforderung zugeordnet sein, wobei insbesondere zumindest einem der Steuerbefehle zumindest eine Ausführungsanforderung zugeordnet ist. Beispielsweise handelt es sich bei den vorausgesetzten Steuerbefehlen um Steuerbefehle, die z. B. von einem Gerät und/oder Knoten in eine vorgegebene mechanische Bewegung und/oder andere physikalische Größen (z. B. Druck oder Temperatur) umgesetzt wurden oder vor der Abarbeitung der Steuerbefehle umgesetzt sein sollen (z. B. für ein Vorbereiten eines Werkstückes). Mit den vorausgesetzten Steuerbefehlen (sofern diese erfolgreich ausgeführt) wurden dann beispielsweise die Aktoren der Geräte und/oder der Knoten derart angesteuert, dass ein Werkstück in den Zustand bzw. Fertigungszustand versetzt wurde, dass z. B. eine Weiterverarbeitung möglich ist oder nach der Abarbeitung der vorausgesetzten Steuerbefehle ermöglicht wird. Entsprechend können dann z. B. die entsprechenden Geräte/Knoten mit den Steuerbefehlen der Steuertransaktion derart angesteuert werden, dass die Weiterverarbeitung erfolgt (wenn z. B. die vorausgesetzten Steuerbefehle ausgeführt wurden und für diese insbesondere Ausführungsbestätigungsnachrichten vorliegen). Mittels der vorausgesetzten Steuerbefehle und der Geräte und/oder Knoten kann beispielsweise auch ein Regelkreis geregelt und/oder gesteuert werden, indem beispielsweise die Ausführungsbestätigungsnachrichten für ausgeführte/vorausgesetzte Steuerbefehle durch die Vorrichtung oder die Netzwerkapplikation ausgewertet werden und entsprechende Steuerbefehle als Reaktion auf die Ausführungsbestätigungsnachrichten erzeugt werden. Bei den vorausgesetzten Steuerbefehlen kann es sich beispielsweise auch um Steuerbefehle handeln, mit denen ein kryptographisches Gerät und/oder Verfahren angesteuert wurde (z. B. eine Nutzerauthentisierung oder Nutzerauthentifizierung). Alternativ oder zusätzlich kann durch die vorausgesetzten Steuerbefehle beispielsweise eine Erfassung von bestimmten Messgrößen (z. B. durch einen Sensor) vorgegeben sein. Beispielsweise wird damit vorgegeben, dass entsprechende Transaktionen mit entsprechenden Messwerten vorgegebene Messwertbereiche oder Schwellwerte einhalten sollen. Die Messwerte können beispielsweise einen Wert einer gemessenen Größe (z. B. 30 °C) und/oder Datum/Uhrzeit der Erfassung und/oder Ort der Erfassung und/oder Sensortyp und/oder weitere Informationen über den Sensor (z. B. Messgenauigkeit) sein.

Unter einem "separaten und/oder direkten Kommunikationskanal" kann im Zusammenhang mit der Erfindung beispielsweise eine Datenübertragung (z. B. ein Senden, ein Empfangen, ein Übertragen, ein Bereitstellen oder ein Übermitteln) mittels eines Kommunikationskanals verstanden werden, wie dieser beispielsweise durch das Lightning-Netzwerk zunächst nur für die Übertragung von Kryptowährung realisiert ist. Beispielsweise können über diesen Kanal Transaktionen/Nachrichten schneller verschickt werden und eine Bestätigung über diesen Datenaustausch im verteilten Datenbanksystem oder der Netzwerkapplikation gespeichert werden. Damit können beispielsweise wichtige und/oder zeitkritische Steuerbefehle bzw. Steuertransaktionen mit höherer Geschwindigkeit an ein entsprechendes Gerät übertragen werden und dabei z. B. die langsamere Datenübertragung des verteilten Datenbanksystems (z. B. bei der Replikation der Datenblöcke/Transaktionen) oder der Netzwerkapplikation vermieden werden. Beispielsweise können für die Erfindung und die genannten Aspekte, Ausführungsbeispiele, Ausführungsformen der Erfindung und ihre Varianten für eine Datenübertragung zwischen einem Gerät (und/oder Knoten) ein separater und/oder direkter Kommunikationskanal aufgebaut werden. Beispielsweise werden bei einem direkten Kommunikationskanal die Transaktionen/Nachrichten direkt zwischen einem Sender (z. B. das Bereitstellungsmodul und/oder das Bestimmungsmodul) und einem Empfänger (z. B. das Gerät, das die Steuerbefehle ausführen soll) ausgetauscht, ohne dass weitere Knoten und/oder Geräte des verteilten Datenbanksystems oder der Netzwerkapplikation in diesem Datenaustausch involviert sind. Hingegen können bei einem separaten Kommunikationskanal Knoten und/oder Geräte des verteilten Datenbanksystems oder der Netzwerkapplikation in den Datenaustausch involviert sein. Wurde der separate und/oder direkte Kommunikationskanal erfolgreich zwischen dem Sender und dem Empfänger aufgebaut (es wurde also hierdurch insbesondere eine Kommunikationsverbindung etabliert), so können Daten beispielsweise in Form von Transaktionen oder Nachrichten zwischen dem Sender und dem Empfänger ausgetauscht werden. Beispielsweise können die notwendigen Daten für ein Ermitteln der Ausführbarkeit und/oder die Steuertransaktionen zwischen dem Sender und/dem Empfänger ausgetauscht werden. Wird beispielsweise der Kommunikationskanal geschlossen/beendet (also es wird insbesondere eine Kommunikationsverbindung beendet) so wird beispielsweis ein Ergebnis der Datenübertragung z. B. in Form von Transaktionen (z. B. als eine Übertragungsbestätigungstransaktion) in dem verteilten Datenbanksystem gespeichert (z. B. in Datenblöcken des verteilten Datenbanksystems) oder in der Netzwerkapplikation gespeichert. Das Ergebnis der Datenübertragung kann beispielsweise eine Bestätigung der Übertragung oder des Empfangs der entsprechenden Transaktionen/Nachrichten sein und/oder ein Analyseergebnis und/oder die letzte übertragene Transaktion/Nachricht, die über den separaten und/oder direkten Kommunikationskanal übertragen wurde, bevor der Kommunikationskanal geschlossen wurde. Das Speichern der Transaktion mit dem Ergebnis kann beispielsweise durch den Sender und/oder Empfänger erfolgen. Bei dem Analyseergebnis kann es sich beispielsweise um die Bestätigung der Ausführbarkeit der Steuerbefehle durch ein Gerät handeln, wobei beispielsweise ein entsprechendes Gerät bestätigt hat, dass es die Steuerbefehle ausführen kann. Dies kann beispielsweise wiederum in einer Transaktion (z. B. in einer Ausführbarkeitsbestätigungstransaktion oder in eine Bestätigungsnachricht) gespeichert werden und z. B. in den Ausführungsanforderungen (z. B. in den gerätespezifischen Anforderungen) gespeichert werden. Alternativ oder zusätzlich wird eine Ausführbarkeitsbestätigungstransaktion in dem verteilten Datenbanksystem oder der Netzwerkapplikation gespeichert. Die Ausführbarkeitsbestätigungstransaktion umfasst dabei beispielsweise einen eindeutigen Identifizierer für das Gerät, das in der Lage ist, die Steuerbefehle auszuführen bzw. die entsprechenden Ausführungsanforderungen erfüllt. Alternativ oder zusätzlich umfasst die Ausführbarkeitsbestätigungstransaktion beispielsweise Daten über die Ausführung z. B. wie gut bzw. zu welchem Grad die Ausführungsanforderungen erfüllt werden (z. B. wie schnell die Steuerbefehle abgearbeitet sind, wann diese sicher abgearbeitet sind, wie genau oder präzise die Steuerbefehle ausgeführt werden - beispielsweise beim Ausführen von Fertigungssteuerbefehlen). Alternativ oder zusätzlich umfasst die Ausführbarkeitsbestätigungstransaktion beispielsweise gerätespezifische Daten des entsprechenden Gerätes, die für die Ausführung der Steuerbefehle relevant sind, wobei z. B. die gerätespezifische Daten von dem entsprechenden Gerät zum Zeitpunkt der Bestätigung der Ausführbarkeit durch das Gerät ermittelt wurden. Dabei erfolgt z. B. die Bestätigung der Ausführbarkeit und die Ermittlung der gerätespezifischen Daten (in etwa) zum gleichen Zeitpunkt - beispielsweise innerhalb eines Zeitfensters von wenigen Sekunden oder Minuten. Beispielsweise können die Daten der Ausführbarkeitsbestätigungstransaktion auch zwischen dem Sender und dem Empfänger ausgetauscht worden sein, bevor die Ausführbarkeitsbestätigungstransaktion z. B. in dem verteilten Datenbanksystem oder der Netzwerkapplikation gespeichert wird. Die Ausführbarkeitsbestätigungstransaktion kann beispielsweise noch kryptographisch geschützt sein (z. B. kann diese verschlüsselt sein oder durch eine Transaktionsprüfsumme geschützt sein). Auch können beispielsweise die Steuertransaktionen auf analoge Weise an das entsprechende Gerät übertragen werden, das die Steuerbefehle ausfühlen soll bzw. kann. Hierzu kann beispielsweise ein weiterer separater und/oder direkter Kommunikationskanal zwischen dem Sender und dem Empfänger aufgebaut werden. Alternativ kann der oben genannte Kommunikationskanal beispielsweise weiterverwendet werden. Über den entsprechenden Kommunikationskanal werden dann beispielsweise die entsprechenden Steuertransaktionen an das entsprechende Gerät übertragen. Wird beispielsweise der Kommunikationskanal wieder geschlossen/beendet, wenn die Übertragung (erfolgreich) abgeschlossen wurde, wird das Ergebnis der Übertragung z. B. als eine Übertragungsbestätigungstransaktion in dem verteilten Datenbanksystem oder der Netzwerkapplikation gespeichert. Auch kann beispielsweise die zuletzt über den Kommunikationskanal ausgetauschte Nachricht in der Übertragungsbestätigungstransaktion gespeichert werden (z. B. falls der Kommunikationskanal unterbrochen wird) und die Übertragungsbestätigungstransaktion z. B. dann im verteilten Datenbanksystem oder in der Netzwerkapplikation gespeichert werden. Diese zuletzt ausgetauschte Nachricht kann beispielsweise verwendet werden, um bei einem erneuten Aufbau des Kommunikationskanals den Datenaustausch bzw. die Datenübertragung fortzusetzen. Die Übertragungsbestätigungstransaktion kann beispielsweise auch kryptographisch geschützt sein. Die Übertragungsbestätigungstransaktion kann beispielsweise die Steuerbefehle und/oder die Steuertransaktion und/oder die letzte ausgetauschte Nachricht zwischen dem Sender und dem Empfänger umfassen. Eine Fortsetzung des Datenaustausches bzw. der Datenübertragung kann beispielsweise auch für andere Datenübertragungen genutzt werden und ist nicht speziell auf die Datenübertragung bzw. den Datenaustausch von Steuertransaktionen beschränkt.

Der separate und/oder direkte Kommunikationskanal ist dahingehend vorteilhaft, um eine Übertragungsgeschwindigkeit und/oder Übertragungslatenzzeit zu verbessern. Es ist beispielsweise auch ein Hybridverfahren möglich, indem beispielsweise ein entsprechender Kommunikationskanal für zeitkritische Steuerbefehle (z. B. mit hoher Priorität) genutzt wird. Beispielsweise kann anhand der Ausführungsanforderungen (z. B. es sind zeitkritische Steuerbefehle oder Steuerbefehle für eine Echtzeitanwendung) bestimmt werden, ob es sich um entsprechende Steuerbefehle handelt, die über einen entsprechenden separaten Kommunikationskanal übertragen werden sollen. Alternativ oder zusätzlich kann das Bestimmungsmodul beispielsweise beim Bestimmen der Ausführungsanforderungen entsprechende Übertragungsanforderungen für eine Datenübertragung der Steuertransaktionen bestimmen. Die Übertragungsanforderungen können beispielsweise in den Ausführungsanforderungen gespeichert werden. Anhand der Übertragungsanforderungen kann dann beispielsweise das Bereitstellungsmodul ermitteln, ob die Steuertransaktionen über eine Übertragung an das entsprechende Gerät in dem verteilten Datenbanksystem oder der Netzwerkapplikation gespeichert werden oder ob der separate und/oder direkte Kommunikationskanal für eine Datenübertragung an das entsprechende Gerät genutzt wird. Die Datenübertragung kann dann beispielsweise durch das Bereitstellungsmodul der Vorrichtung erfolgen, das hierzu z. B. ein entsprechendes Kommunikationsmodul (z. B. eine Netzwerkschnittstelle) umfasst.

Die Erfindung ist dahingehend vorteilhaft, um beispielsweise eine Blockkette, eine Netzwerkapplikation oder ein verteiltes Datenbanksystem z. B. als industrielle Kommunikationsinfrastruktur und/oder Steuerungsplattform z. B. im Fertigungsbereich einzusetzen. Hierdurch kann insbesondere eine Fertigungsinfrastruktur realisiert werden, bei der Geräte (z. B. autonome Geräte) von unterschiedlichen Betreibern in einer vertrauensunwürdigen Umgebung eine Vertrauensbasis benötigen, um einen Fertigungsauftrag abzuarbeiten (Trust in a trustless environment). Hierbei können z. B. durch die Konfigurierbarkeit und die Auswählbarkeit der Validierung und/oder Übertragung beispielsweise zeitliche Anforderungen vorgegeben werden. Das verteilte Datenbanksystem validiert z. B. nur diejenigen Transaktionen, die von einem entsprechenden blockkettenbasierten Fertigungssystem bzw. den entsprechenden Geräten ausgeführt werden können, indem z. B. eine vorgegebene Anzahl von Knoten bestätigen, dass sie diese Transaktionen ausführen.

Beispielsweise ist es auch möglich, dass die vorgegebene Anzahl von Knoten, zumindest zum Teil oder vollständig Knoten eines Shards sind (z. B. eines Ethereum-Shards). Alternativ ist es auch möglich, dass die vorgegebene Anzahl von Knoten, zumindest zum Teil Knoten von unterschiedlichen Shards sind. Die jeweiligen Shards einer Netzwerkapplikation (z. B. eines verteilten Datenbanksystems wie einer Blockkette) können spezifisch für Knoten in Form Geräten gebildet werden, indem z. B. die Knoten eines Shards durch die Geräteeigenschaften (z. B. Fertigungsgerät, Prüfgerät, sicheres Gerät oder Gerät mit hoher Zuverlässigkeit oder Fertigungspräzision) gebildet werden.

Die Erfindung eignet sich insbesondere für IoT-Anwendungen der Blockkette, bei der z. B. zumindest ein Gerät irgendeine Steueraktion ausführen soll, wobei die Ausführung gewissen Ausführungsanforderungen unterworfen ist.

Mittels der Erfindung können konventionelle Blockketten z. B. dahingehend verbessert werden, um die Ausführbarkeit von Transaktionen zu verbessern oder zu verhindern, dass nicht ausführbare Transaktionen in der Blockkette gespeichert werden. Dies ist insbesondere, wenn die Steuertransaktionen bzw. die Steuerbefehle einen Smart-Contract kodieren bzw. umfassen, da es z. B. einen Bedarf dahingehend gibt, vorzugsweise ausführbare Smart-Contracts in einer Blockkette zu speichern.

Im digitalen industriellen Umfeld ist die Vernetzung von Edge-Devices und IoT-Geräten ein wichtiger Aspekt. Insbesondere das Bilden von Ökosystemen, bei denen diese entsprechenden Geräte bzw. eine Vielzahl solcher Geräte miteinander kommunizieren, um Prozesse zu steuern, ist eine Herausforderung. Eine besondere Herausforderung ist dabei die Kommunikation in Systemen mit unterschiedlichen Geräteherstellern oder Geräteeigentürmern, die sich nicht zwangsläufig vertrauen. Seit einigen Jahren sind Kommunikationsinfrastrukturen (auch IoT-Infrastrukturen genannt) verfügbar, die eine vertrauenswürdige Kommunikation zwischen solchen Geräten selbst in einer als nicht vertrauenswürdig eingestuften Umgebung und ggf. ohne zentrale vertrauensbildenden Drittpartei erlauben. Eine solche Technologie sind z. B. Distributed Ledger Technologien (DLT).

Problematisch dabei ist, dass bei einer Abarbeitung eines Prozesses (z. B. eines Fertigungsprozesses, ein Steuerungsprozess einer komplexen (Stadt)Infrastruktur) durch eine Vielzahl von unterschiedlichen IoT-Geräten in einem heterogenen IoT-Netzwerk unklar ist, ob und wie dieser Prozess durch das technische System ausgeführt werden kann oder ob für dessen Ausführung Optimierungen notwendig sind. Insbesondere in einer semi-automatisieren oder vollautomatisierten IoT Steuerungsinfrastruktur mit verschiedenen Stakeholdern, bei der Teile der Prozesse dynamisch während der Prozessausführung angepasst werden müssen, kann die Prozessausführung unterbrochen oder sogar abgebrochen werden.

Bei konventionellen Lösungen wird durch einen Techniker vor Ort die Prozessausführung überwacht und ggf. manuell eingegriffen.

Die offenbarten Techniken lösen das Problem, dass bei einer industriellen Anwendung einer Blockchain bzw. eines verteilten Datenbanksystems nur diejenigen Transaktionen validiert und in die Blockchain aufgenommen werden sollen, deren Ausführbarkeit mittels einer ggf. beispielswiese durch die Systemteilnehmer oder einen anderen Mechanismus zertifizierten Digital Twin basierten Simulation des Prozesses oder der Anwendung entweder bestätigt worden ist oder deren Ausführbarkeit durch eine Optimierung bzw. Rekonfiguration der Steuerbefehle und der zugehörigen Transaktionen hergestellt werden konnte. Hierzu umfassen Knoten des Netzwerkes, die Blöcke und Transaktionen in die Blockkette einstellen können, über eine Schnittstelle zu einem Digitalen Zwilling der Blockchain bzw. IoT-Infrastruktur.

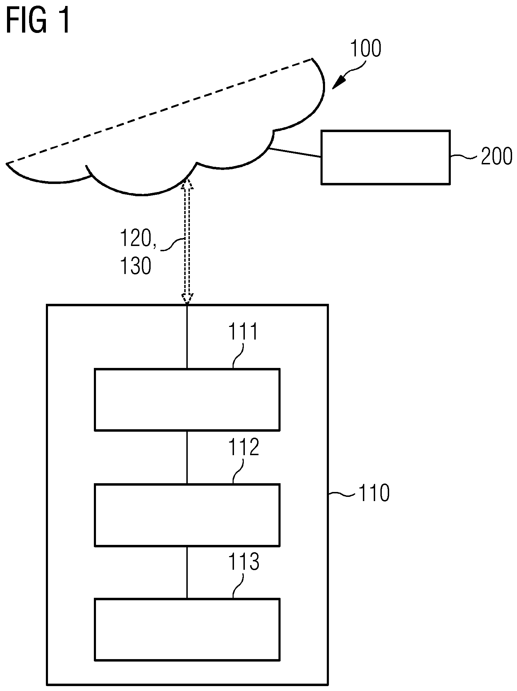

Figur 1 zeigt schematisch einen Netzwerkknoten 110, gemäß Ausführungsbeispielen der Erfindung.

Der Netzwerknoten 110 umfasst eine Schnittstelle 111, einen Prozessor 112 und einen Speicher 113. Über die Schnittstelle 111, ist der Netzwerknoten mit dem Netzwerk 100 kommunikativ verbunden, wobei der Knoten über die Schnittstelle von dem Netzwerk 100 Transaktionen 120 und Validierungsanforderungen 130 empfangen kann, sowie Transaktionen 120 und Validierungsanforderungen 130 an das Netzwerk 100 und/oder die digitale Simulation 200 eines technischen Systems übermitteln kann. Die digitale Simulation 200 ist in Figur eins als Netzwerkknoten in dem Netzwerk 100 ausgebildet.

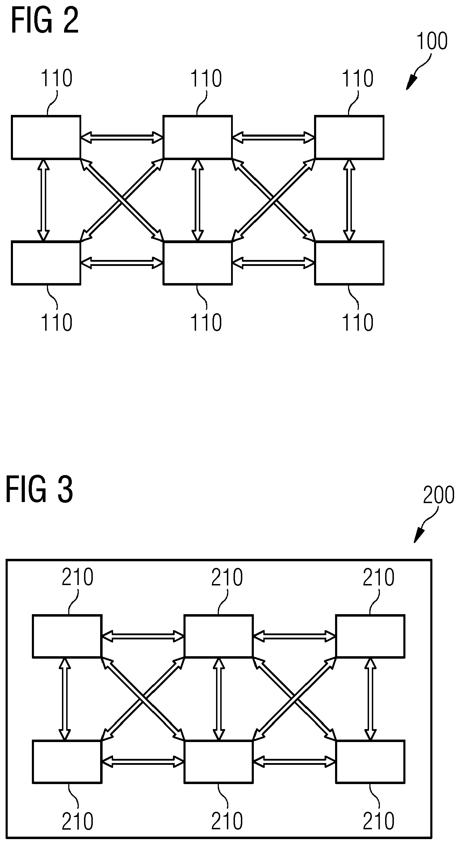

Figur 2 zeigt schematisch ein Netzwerk 100, gemäß Ausführungsbeispielen der Erfindung.

Das Netzwerk 100 in Figur 2 kann eine IoT-Infrastruktur sein, in der eine Vielzahl von Knoten 110 in einem dezentralen Netzwerk miteinander kommunikativ verbunden sind. Wie in Figur zwei gezeigt befinden sich die Netzwerkknoten 110 in einem P2P-Netzwerk ohne zentrale Instanz, wobei die Knoten 110 gemeinsam beispielsweise eine verteilte Datenbank realisieren können. Jeder der Knoten 110 kann zur Steuerung mit einer Komponente eines technischen Systems verbunden sein, oder diese umfassen. In anderen Worten umfasst die IoT-Infrastruktur sowohl ein technisches System als auch Netzwerkknoten eines Kommunikationsnetzwerks uns gleich oder einer Datenbank. Über das Netzwerk können Steuerbefehle, Sensordaten, oder im allgemeinen Transaktionen, welche beim Ausführen eines Prozesses auf dem technischen System anfallen, ausgetauscht und gespeichert werden.

Beispielsweise soll die IoT-Infrastruktur 100 in Figur 2 die folgenden Transaktionen durchführen:
Transaktion A: Steuerbefehle zum Ansteuern eines Förderbandes für den Transport eines Werkstücks;
Transaktion B: Steuerbefehle zum Bohren von Löchern auf der Unterseite des Werkstückes;
Transaktion C: Steuerbefehle zum Bohren von Löchern auf der Oberseite des Werkstückes;
Transaktion D: Steuerbefehle zum Abschleifen des Werkstückes; und
Transaktion E: Steuerbefehle zum Lackieren des Werkstückes.

In einem Schritt werden die Transaktionen A-E 120 an einen Knoten 110 bzw. IoT Gerät übermittelt. Der Knoten 110 empfängt die Transaktionen A bis E, welche durch das technische System ausgeführt werden sollen.

In einem Schritt werden für die entsprechenden Transaktionen 120 Validierungsanforderungen 130 bestimmt oder diese Validierungsanforderungen 130 sind bei den entsprechenden Transaktionen 120 beigefügt. Diese Validierungsanforderungen 103 können separat oder mit Hilfe einer digitalen Simulation des technischen Systems, des sogenannten Digitalen Zwillings, ermittelt werden. Für industrielle Anwendungen kann in den Validierungsanforderungen z. B. vorgegeben sein welche Mindestanzahl der Knoten die Transaktionen ausführen können, welche Gerätevoraussetzungen (Standort, Präzision bei Ausführung, Sicherheitseinrichtungen) durch die Knoten erfüllbar sind, innerhalb welcher Zeitspanne die Transaktion ausgeführt sein soll, oder eine Preisspanne für die Entlohnung für die Ausführung der Transaktion.

Die Transaktionen umfassen dabei beispielsweise Steuerbefehle zum Steuern bzw. Abarbeiten eines Fertigungsprozesses für ein Werkstück. Die Validierungsanforderungen können z. B. vorgeben, dass das Werkstück in 2 Stunden gefertigt werden soll.

Figur 3 zeigt schematisch eine digitale Simulation 200 der IoT-Infrastruktur 100 der Figur 2, gemäß Ausführungsbeispielen der Erfindung.

Wie in Figur 3 zu sehen, stellt die digitale Simulation 200 eine zu dem technischen System und/oder dem Steuernetzwerk 100 identische Nachbildung dar. Jeder digitale Knoten 210 in der digitalen Simulation 200, entspricht einem Knoten 110 des reellen Netzwerks 100. In der digitalen Simulation können somit die Steuerbefehle, welche in den Transaktionen enthalten sind, auf die gleiche Art und Weise simuliert ausgeführt werden, wie durch das reale System 100. Insbesondere können beispielsweise Auslastungen einzelner Knoten 210, zeitliche Abfolge von Prozessschritten zwischen knoten 210, Abhängigkeiten zwischen den Knoten 210, und auch Randbedingungen des technischen Systems wie beispielsweise Sensorwerte simuliert werden.

Unter diesen Voraussetzungen steuert der Knoten 110, der die Transaktionen 120 zur Validierung empfängt, den entsprechenden digitalen Zwilling 200 an. Beispielsweise kann die Simulation dieses Fertigungsprozesses ergeben, dass ein solches Werkstück in der Ursprungsreihenfolge der Transaktionen A-E nicht in 2 Stunden gefertigt werden kann. In einem solchen Fall würde der Knoten die Transaktionen A-E nicht validieren und nicht der Blockkette hinzufügen. Dabei ist vorteilhaft, dass verhindert wird, dass keine Daten in die industrielle Blockkette eingestellt werden, die nicht von IoT-Geräten/Knoten 110 verarbeitet oder abgearbeitet werden können.

Mittels der Simulation durch den Digitalen Zwilling 200 können die Transaktionen bzw. Steuerbefehle aber auch optimiert werden, sodass diese Transaktionen, die anfänglich nicht ausführbar waren, wieder ausführbar gemacht werden. Dabei wird festgestellt, dass die Transaktion B und C von einer IoT-Werkzeugmaschine in einem Schritt abgearbeitet werden kann, indem die Löcher gleichzeitig bzw. am gleichen Gerät oben und unten gebohrt werden. Weiter kann aber auch festgestellt werden, welche Schritte/Reihen nicht verändert werden dürfen. Beispielsweise müssen das Abschleifen und Lackieren nach dem Bohren erfolgen. Auch ist zwingend erforderlich, dass das Lackieren nach dem Abschleifen erfolgt.

Konnte festgestellt werden, dass die angepassten oder optimierten Transaktionen 120 bzw. der Prozess durch das kombinierte IoT- Blockchain-Netzwerk abarbeitbar ist, so können z. B. die Steuerbefehle bzw. Transaktionen 120 neuorganisiert werden, bevor sie als validierte Transaktionen 120 in die Blockkette eingestellt werden. Hierdurch wird sichergestellt, dass nur tatsächlich ausführbare Steuertransaktionen in die Blockkette eingestellt werden.

Sind die Transaktionen 120 in die Blockkette eingestellt und werden diese abgearbeitet, z. B. Transaktion A, wird nach deren Abarbeitung eine Bestätigungstransaktion in die Blockkette eingestellt. Hiermit wird signalisiert, dass Transaktion B/C von dem nächsten IoT-Fertigungsknoten 110 abgearbeitet werden kann.

In einer Variante können die durch die Simulation gewonnen Informationen dazu verwendet werden, die entsprechenden Steuertransaktionen A-D beschleunigt an entsprechende IoT-Blockchain-Knoten zu übertragen (z. B. unter Verwendung des Lightning-Netzwerkes oder eines ähnlich Protokolls: https://de.wikipedia.org/wiki/Lightning-Netzwerk) oder nach der Abarbeitung einer Transaktion mittels eines solchen Ansatzes die Abarbeitung der nächsten Transaktion 120 angestoßen werden. In einem solchen Fall würden die entsprechen IoT-Geräte direkt miteinander kommunizieren, indem sie die Informationen aus der Simulation verwenden (z.B. welches Gerät welche Steuerbefehle abarbeiten kann). Die IoT-Geräte speichern dann die entsprechenden Informationen über die Abarbeitung und deren Bestätigung in der Blockkette (siehe Lightning-Netzwerk). Es kann auch eine Mischung eines solchen Verarbeitungssystems implementiert werden, da es z. B. Steuertransaktionen gibt, die möglichst schnell nacheinander abgearbeitet werden müssen (z. B. das Werkstück darf nicht zu stark abkühlen).

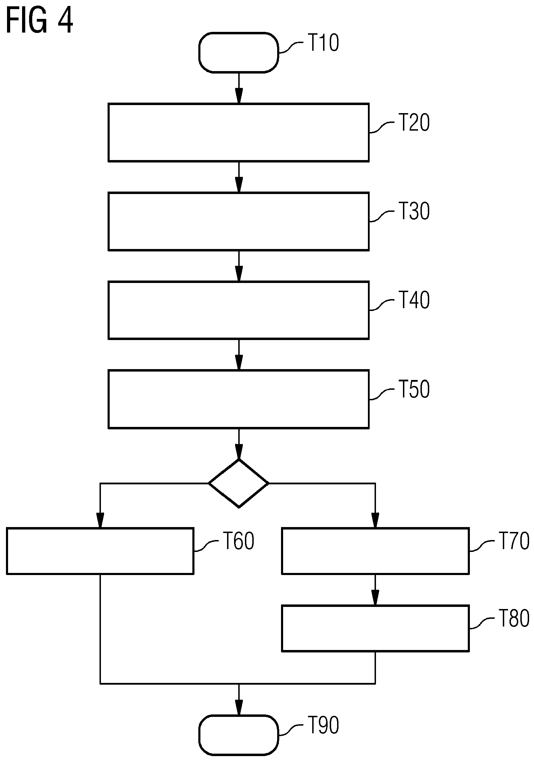

Figur 4 zeigt ein Flussdiagramm mit Schritten für einen Netzwerkknoten 100, gemäß Ausführungsbeispielen der Erfindung.

Das Verfahren beginnt in Schritt T10. In Schritt T20 wird von einem Knoten eine Transaktion empfangen, welche Steuerbefehle enthält, die durch das technische System ausgeführt werden sollen. In Schritt T30 wird für die Transaktion eine Validierungsanforderung bestimmt. In Schritt T40 wird die Transaktion und die bestimmte Validierungsanforderung für die Transaktion an eine digitale Simulation des Netzwerks übertragen. In Schritt T50 wird die Transaktion in der digitalen Simulation ausgeführt, um festzustellen, ob die Transaktion entsprechend der Validierungsanforderung ausgeführt werden kann. Wenn die Transaktion in der digitalen Simulation derart ausgeführt werden kann, dass die Validierungsanforderung erfüllt ist, dann wird die Transaktion in Schritt T60 in dem Netzwerk validiert für eine Ausführung durch das technische System, beispielsweise wird die Transaktion in einer verteilten Datenbank des Netzwerks für eine Ausführung gespeichert. Wenn durch die digitale Simulation festgestellt wird, dass die Transaktion nicht entsprechend der Validierungsanforderung ausgeführt werden kann, dann wird in Schritt T70 geprüft, ob durch eine Rekonfiguration der Steuerbefehle in der Transaktion eine Ausführbarkeit der Transaktion hergestellt werden kann, sowie im Weiteren in Schritt T80 die rekonfigurierten Steuerbefehle als neue Transaktion in dem Netzwerk gespeichert. Das Verfahren endet in Schritt T90.

Im Allgemeinen sehen Beispiele der vorliegenden Offenbarung eine Vielzahl von Schaltungen, Datenspeichern, Schnittstellen oder elektrische Verarbeitungsvorrichtungen z.B. Prozessoren vor. Alle Verweise auf diese Einheiten und andere elektrische Geräte sowie die von ihnen bereitgestellte Funktionen sind nicht auf das beschränkt, was veranschaulicht und beschrieben wird. Während den verschiedenen Schaltkreisen oder anderen offenbarten elektrischen Geräten bestimmte Bezeichnungen zugeordnet werden können, sind diese Bezeichnungen nicht dazu bestimmt, den Funktionsumfang der Schaltkreise und der anderen elektrischen Geräte einzuschränken. Diese Schaltkreise und andere elektrische Geräte können je nach der gewünschten Art der elektrischen Ausführung miteinander kombiniert und/oder voneinander getrennt werden. Es ist zu verstehen, dass jede offenbarte Schaltung oder andere elektrische Vorrichtung eine beliebige Anzahl von Mikrocontrollern, Grafikprozessoreinheiten (GPU), integrierte Schaltungen, Speichervorrichtungen, z.B. FLASH, Arbeitsspeicher(RAM), Read Only Memory (ROM), elektrisch programmierbarer Read Only Memory (EPROM), elektrisch löschbarer programmierbarer Read Only Memory (EEPROM), oder beliebige andere geeignete Ausführungsformen derselben umfassen können, sowie Software, welche miteinander zusammenarbeiten, um die hierin offenbarten Verfahrensschritte durchzuführen. Darüber hinaus kann jede der elektrischen Vorrichtungen konfiguriert sein, um Programmcode auszuführen, der in einem elektronisch lesbaren Datenträger enthalten ist, und der konfiguriert ist, um eine beliebige Anzahl von Schritten gemäß der Verfahren der vorliegenden Offenbarung auszuführen.

Aus dem oben Gesagten lassen sich einige allgemeine Schlussfolgerungen ziehen:
Wenn eine Transaktion nicht entsprechend einer Validierungsanforderung ausgeführt werden kann, kann der Knoten weiter konfiguriert sein zum Anpassen der Steuerbefehle unter Verwenden der digitalen Simulation, um angepasste Steuerbefehle zu finden. Dabei kann der Knoten beispielsweise einen oder mehrere Parameter, welche durch die Simulation bereitgestellt werden, anpassen. In anderen Worten, das Anpassen der Steuerbefehle kann basierend auf den Ergebnissen der digitalen Simulation. Beispielsweise kann der Knoten basierend auf der Validierungsanforderung einen Parameter in den Steuerbefehlen anpassen, beispielsweise eine Reihenfolge in der Bearbeitung der Steuerbefehle.

Der Knoten kann weiter konfiguriert sein, um ein Ausführen der geänderten Steuerbefehle durch die digitale Simulation zu initiieren, um festzustellen, ob die angepassten Steuerbefehle entsprechend der Validierungsanforderung ausgeführt werden können.

Wenn festgestellt wird, dass die angepassten Steuerbefehle durch das technische System ausgeführt werden können, kann der Knoten konfiguriert sein, die angepassten Steuerbefehle als neue Transaktion für eine Ausführung durch das technische System zu validieren.

Es kann somit sichergestellt sein, dass ausschließlich eine Transaktion für ein Ausführen durch das technische System validiert wird, deren Ausführbarkeit durch eine Simulation der enthaltenen Steuerbefehle in der digitalen Simulation bestätigt worden.

Die digitale Simulation kann ein Digitaler Zwilling des technischen Systems und/oder des Steuerungsnetzwerks sein.

Das Netzwerk kann eine Netzwerkapplikation (bzw. die Infrastruktur der Netzwerkapplikation) wie verteilte Datenbank, insbesondere eine Datenbank basierend auf einer Distributed-Ledger-Technologie (DLT), sein. Das Validieren einer Transaktion für eine Ausführung durch das technische System kann ein Speichern der Transaktion durch eine verteilte Datenbank oder Netzwerkapplikation umfassen, welche durch eine Vielzahl von IoT-Geräten des technischen Systems gebildet wird. Dabei kann das technische System zusammen mit dem Netzwerk (100) zur Steuerung des technischen Systems ein Internet-of-Things (IoT) -System sein. Der Knoten kann ausgebildet sein die Transaktion als Datenblock in einer Blockkette zu speichern.

Wenn festgestellt wurde, dass die Transaktion entsprechend der Validierungsanforderung durch das technische System ausgeführt werden kann, kann der Knoten die Transaktion, basierend auf der erfolgreichen Simulation durch die digitale Simulation, an einen oder mehrere Knoten, der die Transaktion ausführen soll weiterleiten. Insbesondere kann das Weiterleiten durch einen von einer vollständigen Datenreplizierung in dem Netzwerk unabhängigen Übertragungsmechanismus durchgeführt werden. Dabei kann ein Übertragungsmechanismus verwendet werden, welcher ein Lightning-Protokoll umfasst.

Durch einen Vergleich in der simulierten Ausführung der Transaktion mit einer nachfolgenden realen Ausführung der Transaktion durch das technische System kann eine Güte der Validierung eines Knoten der digitalen Simulation bestimmt werden. Die Güte der Validierung des Knoten kann bei einer Validierung einer weiteren Transaktion verwendet werden, um einen dynamischen Gewichtungsfaktor des Knoten gegenüber anderen Knoten der digitalen Simulation zu bestimmen.

Eine Transaktion kann validiert werden, wenn eine vorbestimmte Anzahl von Knoten der digitalen Simulation bestätigt, dass die Transaktion entsprechend der Validierungsanforderung ausgeführt werden kann. Hier kann einem Knoten auch ein Gewichtungsfaktor zugeordnet sein, welcher der Bestätigung des Knoten eine höhere oder geringere Relevanz gegenüber Relevanzen von Bestätigungen anderer Knoten zuordnet. Eine Transaktion kann somit auch validiert werden, wenn sie in Summe eine vorbestimmte Relevanz erreicht.

Es ist zu verstehen, dass die offenbarten Techniken auf eine Vielzahl von Transaktionen angewendet werden können. Ein Knoten empfängt eine Vielzahl von Transaktionen. Die Transaktionen umfassen jeweils Steuerbefehle, welche durch einen korrespondierenden Knoten des technischen Systems ausgeführt werden sollen. Für jede Transaktion wird eine zugehörige Validierungsanforderung bestimmt. Die Transaktionen und die zugehörigen Validierungsanforderungen werden durch den Knoten an eine digitale Simulation des technischen Systems übertragen. In der digitalen Simulation werden die Transaktionen ausgeführt, um festzustellen ob sie entsprechend der zugehörigen Validierungsanforderungen ausgeführt werden können. Wenn festgestellt wird, dass eine vorgegebene Mindestanzahl von Knoten der digitalen Simulation die korrespondierenden Transaktionen entsprechend der zugehörigen Validierungsanforderungen ausführen können, dann kann der Knoten alle Transaktionen zur Ausführung durch das technische System validieren.

Die Verfahren können vorzugsweise rechnergestützt, d.h. computerimplementiert, realisiert sein.

Die offenbarten Techniken eignet sich insbesondere für die Steuerung von Prozessen in einer Internet-of-Things- (IoT-) Infrastruktur oder einem IoT-System, bei der zumindest ein IoT-Gerät eine Steueraktion mittels Steuerbefehlen ausführen soll, wobei die Ausführung gewissen Anforderungen unterworfen ist, welche durch Validierungsanforderungen repräsentiert sein können. In einem industriellen Umfeld kann ein technisches System durch ein IoT-Steuerungsnetzwerk gesteuert werden. Ein technisches System kann verschiedene Komponenten (Geräte/Maschinen/Anlagenteile) einer maschinellen Anlage umfassen, die zusammenarbeiten, um einen Prozess auszuführen. Eine Komponente kann beispielsweise eine Steuerung, einen oder mehrere Sensoren, eine Netzwerkschnittstelle, einen Prozessor und einen Speicher umfassen, welche einen Knoten des Steuerungsnetzwerks repräsentieren.

Ein IoT-System oder Netzwerkapplikation oder eine Netzwerkstruktur können als ein Steuersystem zum Steuern einer Ausführung von Transaktionen durch das technische System dienen, und als verteilte Datenbank, DLT-Datenbank, und/oder eine Blockkette, oder einer Kombination der genannten Möglichkeiten realisiert sein.

Validierungsanforderungen können von Transaktion vorgegeben sein, oder berechnet werden. Beispielsweise können Validierungsanforderungen integral in eine Blockkette integriert sein (z. B. im Genesisblock).

Mindestanforderungen/ Validierungsanforderungen können durch eine Analyse der Transaktion durch den Knoten ermittelt werden.

Ein derartiges Ermitteln kann basieren auf, bzw. ermittelt werden unter Verwenden von beispielsweise einem oder mehreren der folgenden Aspekte:
- Priorität der Steuerbefehle
- Geforderter höchste Ausführungszeit
- Ausführungskosten
- Entrichtung von Gebühren
- Ausführungszeitrahmen
- Präzision der Ausführung
- Anforderung an Komponenteninteraktion und Systemrückmeldungen

Bei dem Bestätigen der Ausführbarkeit kann die Simulation beispielsweise die folgenden Aspekte berücksichtigen, bzw. die Ergebnisse der folgenden Überprüfungen verwenden:
- Knoten überprüfen ihren eigenen Systemzustand (z.B. steht Wartung an, sind Werkzeuge abgenutzt, kann die geforderte Fertigungspräzision eingehalten werden)
- Knoten überprüfen den Systemzustand anderer relevanter Systeme beispielsweise durch spezifische Anfragen
- Knoten überprüfen ihren Backlog, was noch auszuführen ist
- Knoten überprüfen eigene oder anderweitig zugreifbare Datenhistorien (engl. historians), um z.B. mit Machine Learning eine abgeleitete Vorhersage der Ausführungsergebnisse für eine Transaktion zu machen. Hierbei kann ein Knoten mit Trainingsdaten trainierte (Ende-zu-Ende trainierte) Funktionen auf eine oder mehrere Datenhistorien anwenden, wodurch als direkte Ausgabe eine Vorhersage der Ausführungsergebnisse ausgegeben wird.

Hierzu können die entsprechenden Knoten eine Schnittstelle umfassen, um die entsprechenden Informationen möglichst aktuell dem digitalen Zwillings-Knoten zur Verfügung zu stellen. Damit kann die Simulation möglichst exakt ausgeführt werden.

Abhängige Transaktionen können z. B. als eine Gesamttransaktion (der gesamte Prozess, der ausgeführt werden soll) betrachtet werden, die validiert wird (um die Gesamttransaktion zu validieren müssen die entsprechenden Einzeltransaktionen ebenfalls validiert werden).

Bei dem Ausführen der Transaktionen durch die Knoten können folgende Aspekte z. B. in der Simulation berücksichtigt werden:
Anhand der Bestätigungsreihenfolge (z. B. nach Zeit, Verfügbarkeit etc.) wird eine Reihenfolge für die Ausführungsknoten festgelegt.

Wenn der erste Knoten nicht innerhalb einer vorgegebenen Zeitspanne (z. B. in den Validierungsanforderungen vorgegeben) die Transaktion ausführt: Übermitteln zum nächsten Knoten.

Die Zeitspanne kann auch anhand der Validierungsanforderungen berechnet werden (z. B. Ziel Transaktion muss innerhalb 8 h ausgeführt werden, 4 Knoten haben sich bereit erklärt die Transaktion auszuführen, wenn der erste Knoten nach 2 h keine Bestätigung für die Ausführung übermittelt, wird der zweite Knoten befragt).

Die Zeitspanne kann diverse weitere Aspekte berücksichtigen: Transportation-Delay für Nachrichten über das Netzwerk (wird gemessen), Verarbeitungszeit durch Knoten.

Ein digitaler Zwilling (oder Digital Twin) kann eine digitale Repräsentanz einer realen Infrastruktur oder eines realen Prozesses darstellen. Digitale Zwillinge ermöglichen einen Datenaustausch mit dem realen Gegenstück. Sie bestehen aus Modellen des repräsentierten Objekts oder Prozesses und können Simulationen umfassen, die Eigenschaften oder Verhalten des repräsentierten Objekts oder Prozesses beschreiben und/oder beeinflussen.

Unter "digitalen Zwilling" (engl. Digital Twin) kann im Zusammenhang mit der Erfindung beispielsweise ein digitales Abbild, insbesondere in Form eines Datenmodells oder einer Datenstruktur, einer realen industriellen Anlage oder eines Fertigungsprozesses auf eine industriellen Anlage verstanden werden. Insbesondere ist der Begriff digitaler Zwilling auch in den folgenden Patentanmeldungen erläutert: WO2016/141998 oder PCT/EP2016/064785. Insbesondere kann ein digitaler Zwilling anhand von Daten des Gegenstandes der abgebildet wird, aktualisiert werden. Diese entsprechenden Daten können beispielsweise durch Sensoren erfasst werden und dann den digitalen Zwilling aktualisieren. Dies kann beispielsweise in Echtzeit, periodisch, manuell gesteuert oder zu vorgegebenen Zeitpunkten erfolgen. Unter einem primären digitalen Zwilling kann beispielsweise eine digitale Simulation eines technischen Systems verstanden werden, die insbesondere eine große Datenmenge umfasst und beispielsweise hunderte oder tausende Datensätze umfasst. In der digitalen Simulation können alle Funktionen und Geräte eines technischen Systems und des Steuerungsnetzwerks des technischen Systems identisch abgebildet sein.

Ein Digitaler Zwilling kann ohne Einschränkungen in unterschiedlicher Art und Weise ausgeführt werden, so lange die relevanten Anforderungen bzgl. der Ausführbarkeit berücksichtigt werden. Der Digital Twin kann beispielsweise als rein analytisch z.B. mit probabilistischen Verfahren erstellte Simulation realisiert werden, er kann Hardware in the Loop Komponenten enthalten, er kann rein auf Machine Learning Verfahren basieren, aber auch jegliche Kombinationen.

Bei einer weiteren Ausführung des Systems kann durch den Vergleich, der durch die Digital Twins validierten Transaktionen mit der realen Ausführung der Prozessschritte, auch die Validität bzw. die Güte der Validierung der einzelnen Digital Twin Knoten ermittelt werden. Diese kann wiederum für eine dynamische Gewichtung der Zustimmung eines Digital Twin Knotens mittels Gewichtungsfaktoren bei der Validierung einer neuen Transaktion im Sinne eines Grades der "Vertragswidrigkeit" genutzt werden.

IoT-Geräte können als Knoten eines verteilten Datenbanksystems ausgebildet sein und es kann beispielsweise zum Ausführen oder Abarbeiten der Steuerbefehle dynamisch ein entsprechender Knoten oder ein entsprechendes Gerät gefunden werden, das die geforderten Validierungsanforderungen zum Ausführen der Steuerbefehle erfüllt.

Zusammenfassend werden Techniken unter anderem für die Steuerung von Prozessen in einer IoT-Infrastruktur bereitgestellt, welche es ermöglichen, eine Blockkette für industrielle Anwendung vor allem im Fertigungsbereich einzusetzen. Hierbei können durch die Konfigurierbarkeit und die Auswählbarkeit der Validierung und/oder Übertragung beispielsweise zeitliche Anforderungen vorgegeben werden. Das verteilte Datenbanksystem validiert nur diejenigen Transaktionen, die von einem entsprechenden blockkettenbasierten Fertigungssystem ausgeführt werden können, indem eine vorgegebene Anzahl von Knoten bestätigen, dass diese die Transaktionen ausführen. Dies stellt sicher, dass nur ausführbare oder potentiell ausführbare Transaktionen Teil der Blockkette werden. Dies ist insbesondere wichtig, wenn man ein solches System als offenes Ökosystem realisiert, bei dem die Validierung von möglichen Transaktionen nicht durch eine Drittpartei realisiert wird.

Dadurch ist es insbesondere möglich eine dezentrale Infrastruktur zur Ausführung von Steuerbefehlen zu realisieren, wobei eine Steuerung eines technischen Systems im Internet der Dinge dezentral durchgeführt wird, selbst wenn sich einzelne Betreiber von Geräten und/oder Gerätegruppen der Geräte nicht vertrauen.

Obwohl die Erfindung in Bezug auf bestimmte bevorzugte Ausführungsbeispiele gezeigt und beschrieben wurde, werden durch Fachleute nach dem Lesen und Verstehen der Beschreibung Äquivalente und Änderungen vorgenommen werden. Die vorliegende Erfindung umfasst alle derartigen Äquivalente und Änderungen und ist nur durch den Umfang der beiliegenden Ansprüche begrenzt.

## Patentansprüche

1. Knoten (110) eines Netzwerks (100) zur Steuerung eines technischen Systems, konfiguriert zum:
- Erhalten einer Transaktion (120) umfassend Steuerbefehle, welche durch das technische System ausgeführt werden sollen;
- Bestimmen einer Validierungsanforderung (130) für die mindestens eine Transaktion (120);
- Übertragen der Transaktion (120) und der Validierungsanforderung (130) an eine digitale Simulation (200) des technischen Systems; und
- Ausführen der Steuerbefehle durch die digitale Simulation (200), um festzustellen, ob die Transaktion (120) entsprechend der Validierungsanforderung (130) ausgeführt werden kann.

2. Knoten (110) nach Anspruch 1, wenn festgestellt wurde, dass die Transaktion (120) entsprechend der Validierungsanforderung (130) ausgeführt werden kann, weiter konfiguriert zum:
- Validieren der Transaktion (120) für eine Ausführung durch das technische System, insbesondere Speichern der Transaktion (120) in dem Netzwerk (100).

3. Knoten (110) nach einem der vorhergehenden Ansprüche, wenn festgestellt wurde, dass die Transaktion (120) nicht entsprechend der Validierungsanforderung (130) ausgeführt werden kann, weiter konfiguriert zum:
- Anpassen der Steuerbefehle unter Verwenden der digitalen Simulation (200), um angepasste Steuerbefehle zu finden, und
- Ausführen der angepassten Steuerbefehle (120) durch die digitale Simulation (200), um festzustellen, ob die angepassten Steuerbefehle (120) entsprechend der Validierungsanforderung (130) ausgeführt werden können, und
- wenn festgestellt wird, dass die angepassten Steuerbefehle durch das technische System ausgeführt werden können, Validieren der angepassten Steuerbefehle als neue Transaktion (120) für eine Ausführung durch das technische System.

4. Knoten (110) nach einem der vorhergehenden Ansprüche, wobei ausschließlich eine Transaktion (120) für ein Ausführen durch das technische System validiert wird, deren Ausführbarkeit durch ein Übertragen an die digitale Simulation (200) und ein Simulieren der Steuerbefehle in der digitalen Simulation (200) bestätigt wurden.

5. Knoten (110) nach einem der vorhergehenden Ansprüche, wobei die digitale Simulation (200) ein Digitaler Zwilling des technischen Systems und/oder des Netzwerks (100) ist.

6. Knoten (110) nach einem der vorhergehenden Ansprüche, wobei das Netzwerk(100) eine Netzwerkapplikation oder eine Infrastruktur einer Netzwerkapplikation oder eine verteilte Datenbank (200) ohne zentrale Instanz, insbesondere eine Datenbank basierend auf einer Distributed-Ledger-Technologie ist.

7. Knoten (110) nach einem der vorhergehenden Ansprüche, wobei das technische System zusammen mit dem Netzwerk (100) zur Steuerung des technischen Systems ein Internet-of-Things (IoT) -System ist.

8. Knoten (110) nach einem der vorhergehenden Ansprüche, wobei der Knoten (110) ausgebildet ist, die Transaktion (120) in einer Blockkette zu speichern.

9. Knoten (110) nach einem der vorhergehenden Ansprüche, wenn festgestellt wurde, dass die Transaktion (120) entsprechend der Validierungsanforderung (130) ausgeführt werden kann, konfiguriert zum:
- Übertragen der Transaktion (120), basierend auf der erfolgreichen Simulation durch die digitale Simulation (200), an den Knoten (110), der die Transaktion (120) ausführen soll, durch einen von einer vollständigen Datenreplizierung in dem Netzwerk (100) unabhängigen Übertragungsmechanismus, insbesondere durch einen gegenüber der vollständigen Datenreplizierung beschleunigten Übertragungsmechanismus.

10. Knoten nach Anspruch 9, wobei der beschleunigte Übertragungsmechanismus eine Komponente gleich oder ähnlich zu einem Lightning-Protokoll umfasst.

11. Knoten (110) nach einem der vorhergehenden Ansprüche, wobei bei einer Ausführung der Transaktion (120) durch das technische System durch ein Vergleichen der durch die digitale Simulation (200) validierten Transaktion (120) mit der realen Ausführung der Transaktion (120) durch das technische System eine Güte der Validierung eines Knoten (210) der digitalen Simulation (200) bestimmt wird.

12. Knoten (110) nach Anspruch 11, wobei die Güte der Validierung eines Knoten (210) der digitalen Simulation (200) dazu verwendete wird, für den Knoten (210) der digitalen Simulation (200) einen dynamische Gewichtungsfaktor gegenüber anderen Knoten (210) der digitalen Simulation (200) zu bestimmen, welcher bei der Validierung einer folgenden Transaktion (120) verwendet wird.

13. Knoten (110) nach einem der vorhergehenden Ansprüche, wobei anstelle einer Transaktion (120) eine Vielzahl von Transaktionen (120) zur Ausführung durch einen jeweiligen korrespondierenden Knoten (110) des technischen Systems validiert werden, konfiguriert zum:
- Erhalten einer Vielzahl von Transaktionen (120), jeweils umfassend Steuerbefehle, welche durch einen korrespondierenden Knoten (110) der maschinellen Anlage ausgeführt werden sollen;
- Bestimmen einer zugehörigen Validierungsanforderung (130) für eine jeweilige Transaktion (120);
- Übertragen der Transaktionen (120) und der zugehörigen Validierungsanforderungen (130) an eine digitale Simulation (200) des technischen Systems;
- Ausführen der Transaktionen (120) in der digitalen Simulation (200), um festzustellen, ob die Transaktionen (120) entsprechend der zugehörigen Validierungsanforderungen (130) ausgeführt werden können; und
- wenn festgestellt wurde, dass eine vorgegebenen Mindestanzahl von Knoten (210) der digitalen Simulation (200) die korrespondierenden Transaktionen (120) entsprechend der zugehörigen Validierungsanforderungen (130) ausführen können, Validieren aller Transaktionen (120) zur Ausführung durch das technische System.

14. Verfahren zum Validieren einer Transaktion zur Ausführung durch einen Knoten (110) eines technischen Systems, umfassend:
- Erhalten einer Transaktion umfassend Steuerbefehle, welche durch das technische System ausgeführt werden sollen;
- Bestimmen einer Validierungsanforderung (130) für die mindestens eine Transaktion;
- Übertragen der Transaktion und der Validierungsanforderung (130) an eine digitale Simulation (200) des technischen Systems; und
- Ausführen der Transaktion in der digitalen Simulation (200), um festzustellen, ob die Transaktion entsprechend der Validierungsanforderung (130) ausgeführt werden kann.

15. Netzwerk (100) zur Steuerung eines technischen Systems, umfassend einen Knoten (110) nach einem der Ansprüche 1-13.
